# EUROPEAN PATENT APPLICATION

(11) **EP 4 815 564 A1**
(43) Date of publication of application: **30.09.2026**
(21) Application number: 24915445.1
(22) Date of filing: 30.12.2024
(51) Int. Cl.: H04W 36/18, H04W 36/08, H04W 76/15, H04W 36/00, H04W 84/12

(54) **METHOD AND DEVICE FOR REQUESTING MLD ROAMING BY CHECKING IN ADVANCE WHETHER AP CAN ROAM IN WIRELESS LAN SYSTEM**

(30) Priority: 03.01.2024 KR 20240001093
(71) Applicant: LG Electronics Inc., Yeongdeungpo-gu Seoul 07336 (KR)
(72) Inventor: YOON, Yelin, Seoul 06772 (KR); CHOI, Jinsoo, Seoul 06772 (KR); JANG, Insun, Seoul 06772 (KR); BAEK, Sunhee, Seoul 06772 (KR); KIM, Geonhwan, Seoul 06772 (KR); CHA, Dongju, Seoul 06772 (KR)
(74) Representative: Mooser, Sebastian Thomas
(86) International application number: PCT/KR2024/021410
(87) International publication number: WO 2025/147033

(57) **Abstract**

A method and a device for requesting MLD roaming by checking in advance whether an AP can roam in a wireless LAN system are presented. Particularly, a first non-AP STA receives a management frame from a first AP. The first non-AP STA determines roaming from the first AP to a second AP on the basis of the management frame. The first AP belongs to a first AP MLD and the second AP belongs to a second AP MLD. The management frame includes first information about whether the second AP is included in a roaming-enabled group, which is the same as that of the first AP. On the basis of the first information being set to 1, the second AP is included in the roaming-enabled group, which is the same as that of the first AP. On the basis of the first information being set to 0, the second AP is not included in the roaming-enabled group, which is the same as that of the first AP.

## Description

### TECHNICAL FIELD

The present specification relates to a scheme for requesting MLD roaming by checking in advance whether an AP is an AP that may perform roaming in a wireless LAN system, and more particularly, to a method and apparatus for informing whether an AP to roam belongs to the same mobility domain or the same group capable of roaming in a management frame.

### BACKGROUND ART

Wireless Local Area Network (WLAN) has been improved in various ways. Based on for example, the IEEE 802.11ax standard proposed an improved communication environment using Orthogonal Frequency Division Multiple Access (OFDMA) and Downlink Multi-User Multiple Input Multiple Output (DL MU MIMO) scheme.

The present specification proposes technical features usable in a new communication standard. Based on for example, the new communication standard may be an Extreme High Throughput (EHT) specification being recently discussed. The EHT specification may use a newly proposed increased bandwidth, an improved PHY Layer Protocol Data Unit (PPDU) structure, an improved sequence, Hybrid Automatic Repeat Request (HARQ) scheme and the like. The EHT specification may be called the IEEE 802.11be specification.

In a new WLAN specification, an increased number of spatial streams may be used. In this case, in order to appropriately use the increased number of spatial streams, a signaling scheme within a WLAN system may need to be improved.

### DISCLOSURE

### TECHNICAL PROBLEM

This specification proposes a method and apparatus for requesting MLD roaming by checking in advance whether an AP is an AP that may perform roaming in a wireless LAN system.

### TECHNICAL SOLUTION

An example of the present specification proposes a method of requesting MLD roaming by checking in advance whether an AP is an AP that may perform roaming.

The present embodiment may be performed in a network environment supporting a next-generation wireless LAN system (an Ultra High Reliability (UHR) wireless LAN system or next wi-fi). The next-generation wireless LAN system is a wireless LAN system improving an 802.11be system and may satisfy backward compatibility with the 802.11be system.

The present embodiment is performed in a receiving STA, and the receiving STA may correspond to at least one station (STA). A transmitting STA may correspond to an access point (AP).

The present embodiment proposes a method of informing, when a non-AP MLD (or non-AP STA) roams to another AP, whether the other AP belongs to the same mobility domain or the same group capable of roaming. In particular, the present embodiment has an effect that seamless roaming may be performed without re-authentication and re-association with an AP to roam by informing in advance whether another AP is capable of roaming through a management frame.

A first non-access point station (non-AP STA) receives a management frame from a first AP.

The first non-AP STA determines roaming from the first AP to a second AP based on the management frame.

The first AP is affiliated with a first AP multi-link device (MLD) and the second AP is affiliated with a second AP MLD. Based on the first and second APs being affiliated with different AP MLDs, AP MLD IDs of the first and second APs may be set to different values.

The management frame includes first information on whether the second AP is included in the same group capable of roaming as the first AP. The first information may be referred to as a Same UHR AP MLD indicator.

Based on the first information being set to 1, the second AP is included in the same group capable of roaming as the first AP. Based on the first information being set to 0, the second AP is not included in the same group capable of roaming as the first AP (for example, the second AP is included in a group capable of roaming different from the first AP).

The first AP may be referred to as an Old AP (O_AP), a Serving AP or a Current AP. The second AP may be referred to as a New AP (N_AP) or a Target AP. The first AP MLD including the first AP may be referred to as a Serving AP MLD. The second AP MLD including the second AP may be referred to as a Target AP MLD.

The group capable of roaming may be referred to as a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

### ADVANTAGEOUS EFFECTS

The present embodiment proposes a method for including first information (UHR AP MLD Indication) in a management frame to check whether an AP is an AP that may perform roaming before a non-AP STA requests roaming, thereby preventing information on APs that may not perform roaming from being requested, which has an effect of preventing unnecessary use of resources. In addition, there is an effect that it is possible to move to another AP without a break while solving packet loss and delay.

### BRIEF DESCRIPTION OF THE DRAWINGS

FIG. 1 shows an example of a transmitting apparatus and/or receiving apparatus of the present specification.
FIG. 2 is a conceptual view illustrating the structure of a wireless local area network (WLAN).
FIG. 3 illustrates a general link setup process.
FIG. 4 shows an example of a multi-link (ML).
FIG. 5 shows an example of a physical protocol data unit or physical layer (PHY) protocol data unit (PPDU) transmitted/received by an STA of the present disclosure.
FIG. 6 is a diagram illustrating the layout of resource units (RUs) used for a 20 MHz PPDU.
FIG. 7 is a diagram illustrating the layout of resource units (RUs) used for 40MHz PPDU.
FIG. 8 is a diagram illustrating the layout of resource units (RUs) used for an 80MHz PPDU.
FIG. 9 shows an operation related to UL-MU.
FIG. 10 illustrates an example of channels used/supported/defined within the 2.4 GHz band.
FIG. 11 illustrates an example of channels used/supported/defined within the 5 GHz band.
FIG. 12 illustrates an example of channels used/supported/defined within the 6 GHz band.
FIG. 13 shows an example of a header of a MAC frame.
FIG. 14 illustrates an example of a modified transmission device and/or receiving device of the present specification.
FIG. 15 illustrates an Over-The-Air (OTA) FT protocol in a Robust Security Network (RSN).
FIG. 16 illustrates a high-level architecture for an AP MLD.
FIG. 17 illustrates an example of a high-level architecture for a UHR AP MLD.
FIG. 18 illustrates another example of a high-level architecture for a UHR AP MLD.
FIG. 19 illustrates an example of a UHR AP MLD structure for Roaming.
FIG. 20 illustrates an example of an RNR IE including MLD Roaming information.
FIG. 21 illustrates an example in which a Same UHR AP MLD indicator is included in a Common Info field.
FIG. 22 illustrates an example in which a Same UHR AP MLD indicator is included in a Link Info field (Mandatory).
FIG. 23 illustrates an example in which a Same UHR AP MLD indicator is included in a Link Info field (Optional).
FIG. 24 is an example of multi-link probe request/response using a Same UHR AP MLD indicator.
FIG. 25 illustrates a flowchart illustrating a Roaming process.
FIG. 26 illustrates an example of primitive parameters of DS-STA-NOTIFY.request.
FIG. 27 is a procedural flowchart illustrating an operation of a transmitting apparatus based on the present embodiment.
FIG. 28 is a procedural flowchart illustrating an operation of a receiving apparatus based on the present embodiment.
FIG. 29 is a flowchart illustrating a procedure of performing MLD roaming by checking whether an AP is an AP that may perform roaming based on the present embodiment.
FIG. 30 is a flowchart illustrating a procedure of performing MLD roaming by checking whether a STA is an AP that may perform roaming based on the present embodiment.

### MODE FOR INVENTION

In the present disclosure, "A or B" may mean "only A", "only B" or "both A and B". In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, a parenthesis used in the present disclosure may mean "for example". Specifically, when indicated as "control information (UHR-signal field)", it may mean that "UHR-signal field" is proposed as an example of the "control information". In other words, the "control information" of the present disclosure is not limited to "UHR-signal field", and "UHR-signal field" may be proposed as an example of the "control information". In addition, when indicated as "control information (i.e., UHR-signal field)", it may also mean that "UHR-signal field" is proposed as an example of the "control information".

Also, "a/an" as used in this disclosure can mean "at least one" or "one or more." Also, a term ending with "(s)" can mean "at least one" or "one or more."

Also, the expressions "based on" or "on the basis of" or "according to" as used in this disclosure mean "based at least in part on," and do not mean "based sonly on."

Technical features described individually in one figure in the present disclosure may be individually implemented, or may be simultaneously implemented.

The following example of the present disclosure may be applied to various wireless communication systems. For example, the following example of the present disclosure may be applied to a wireless local area network (WLAN) system. For example, the present disclosure may be applied to the IEEE 802.11a/g/n/ac/ax/be/bn standard. In addition, an example of the present disclosure can also be applied to a next-generation wireless LAN standard that enhances the Ultra High Reliability (UHR) standard or IEEE 802.11bn. In addition, the example of the present disclosure may also be applied to a new WLAN standard enhanced from the EHT standard or the IEEE 802.11be standard. In addition, the example of the present disclosure may be applied to a mobile communication system. For example, it may be applied to a mobile communication system based on long term evolution (LTE) depending on a 3rd generation partnership project (3GPP) standard and based on evolution of the LTE. In addition, the example of the present disclosure may be applied to a communication system of a 5G NR standard based on the 3GPP standard.

Hereinafter, in order to describe a technical feature of the present disclosure, a technical feature applicable to the present disclosure will be described.

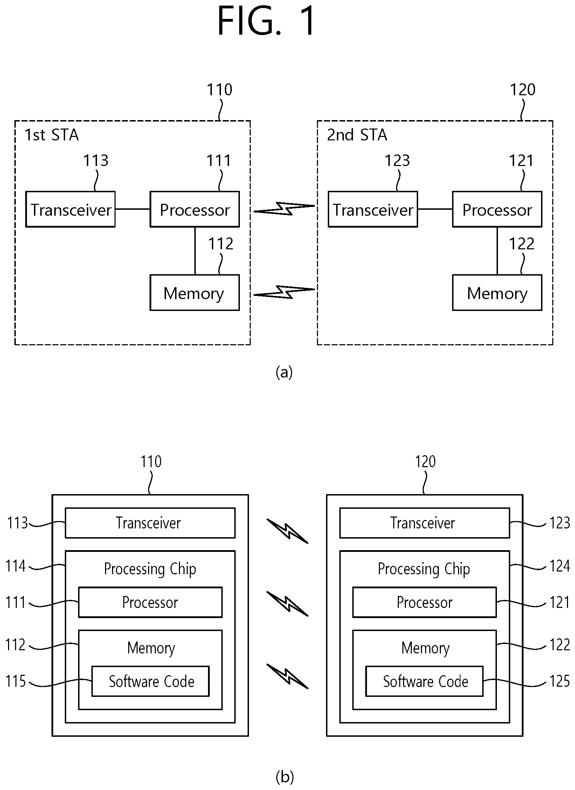

FIG. 1 shows an example of a transmitting apparatus and/or receiving apparatus of the present disclosure.

In the example of FIG. 1, various technical features described below may be performed. FIG. 1 relates to at least one station (STA). For example, STAs 110 and 120 of the present disclosure may also be called in various terms such as a mobile terminal, a wireless device, a wireless transmit/receive unit (WTRU), a user equipment (UE), a mobile station (MS), a mobile subscriber unit, or simply a user. The STAs 110 and 120 of the present disclosure may also be called in various terms such as a network, a base station, a node-B, an access point (AP), a repeater, a router, a relay, or the like. The STAs 110 and 120 of the present disclosure may also be referred to as various names such as a receiving apparatus, a transmitting apparatus, a receiving STA, a transmitting STA, a receiving device, a transmitting device, or the like.

For example, the STAs 110 and 120 may serve as an AP or a non-AP. That is, the STAs 110 and 120 of the present disclosure may serve as the AP and/or the non-AP. In the present disclosure, the AP may be indicated as an AP STA.

The STAs 110 and 120 of the present disclosure may support various communication standards together in addition to the IEEE 802.11 standard. For example, a communication standard (e.g., LTE, LTE-A, 5G NR standard) or the like based on the 3GPP standard may be supported. In addition, the STA of the present disclosure may be implemented as various devices such as a mobile phone, a vehicle, a personal computer, or the like. In addition, the STA of the present disclosure may support communication for various communication services such as voice calls, video calls, data communication, and self-driving (autonomous-driving), or the like.

The STAs 110 and 120 of the present disclosure may include a medium access control (MAC) conforming to the IEEE 802.11 standard and a physical layer interface for a radio medium.

The STAs 110 and 120 will be described below with reference to a sub-figure (a) of FIG. 1.

The first STA 110 may include a processor 111, a memory 112, and a transceiver 113. The illustrated process, memory, and transceiver may be implemented individually as separate chips, or at least two blocks/functions may be implemented through a single chip.

The transceiver 113 of the first STA performs a signal transmission/reception operation. Specifically, an IEEE 802.11 packet (e.g., IEEE 802.11a/b/g/n/ac/ax/be, etc.) may be transmitted/received.

For example, the first STA 110 may perform an operation intended by an AP. For example, the processor 111 of the AP may receive a signal through the transceiver 113, process a reception (RX) signal, generate a transmission (TX) signal, and provide control for signal transmission. The memory 112 of the AP may store a signal (e.g., RX signal) received through the transceiver 113, and may store a signal (e.g., TX signal) to be transmitted through the transceiver.

For example, the second STA 120 may perform an operation intended by a non-AP STA. For example, a transceiver 123 of a non-AP performs a signal transmission/reception operation. Specifically, an IEEE 802.11 packet (e.g., IEEE 802.11a/b/g/n/ac/ax/be packet, etc.) may be transmitted/received.

For example, a processor 121 of the non-AP STA may receive a signal through the transceiver 123, process an RX signal, generate a TX signal, and provide control for signal transmission. A memory 122 of the non-AP STA may store a signal (e.g., RX signal) received through the transceiver 123, and may store a signal (e.g., TX signal) to be transmitted through the transceiver.

For example, an operation of a device indicated as an AP in the disclosure described below may be performed in the first STA 110 or the second STA 120. For example, if the first STA 110 is the AP, the operation of the device indicated as the AP may be controlled by the processor 111 of the first STA 110, and a related signal may be transmitted or received through the transceiver 113 controlled by the processor 111 of the first STA 110. In addition, control information related to the operation of the AP or a TX/RX signal of the AP may be stored in the memory 112 of the first STA 110. In addition, if the second STA 120 is the AP, the operation of the device indicated as the AP may be controlled by the processor 121 of the second STA 120, and a related signal may be transmitted or received through the transceiver 123 controlled by the processor 121 of the second STA 120. In addition, control information related to the operation of the AP or a TX/RX signal of the AP may be stored in the memory 122 of the second STA 120.

For example, in the disclosure described below, an operation of a device indicated as a non-AP (or user-STA) may be performed in the first STA 110 or the second STA 120. For example, if the second STA 120 is the non-AP, the operation of the device indicated as the non-AP may be controlled by the processor 121 of the second STA 120, and a related signal may be transmitted or received through the transceiver 123 controlled by the processor 121 of the second STA 120. In addition, control information related to the operation of the non-AP or a TX/RX signal of the non-AP may be stored in the memory 122 of the second STA 120. For example, if the first STA 110 is the non-AP, the operation of the device indicated as the non-AP may be controlled by the processor 111 of the first STA 110, and a related signal may be transmitted or received through the transceiver 113 controlled by the processor 111 of the first STA 110. In addition, control information related to the operation of the non-AP or a TX/RX signal of the non-AP may be stored in the memory 112 of the first STA 110.

In the disclosure described below, a device called a (transmitting/receiving) STA, a first STA, a second STA, an STA1, an STA2, an AP, a first AP, a second AP, an AP1, an AP2, a (transmitting/receiving) terminal, a (transmitting/receiving) device, a (transmitting/receiving) apparatus, a network, or the like may imply the STAs 110 and 120 of FIG. 1. For example, a device indicated as, without a specific reference numeral, the (transmitting/receiving) STA, the first STA, the second STA, the STA1, the STA2, the AP, the first AP, the second AP, the AP1, the AP2, the (transmitting/receiving) terminal, the (transmitting/receiving) device, the (transmitting/receiving) apparatus, the network, or the like may imply the STAs 110 and 120 of FIG. 1. For example, in the following example, an operation in which various STAs transmit/receive a signal (e.g., a PPDU) may be performed in the transceivers 113 and 123 of FIG. 1. In addition, in the following example, an operation in which various STAs generate a TX/RX signal or perform data processing and computation in advance for the TX/RX signal may be performed in the processors 111 and 121 of FIG. 1. For example, an example of an operation for generating the TX/RX signal or performing the data processing and computation in advance may include: 1) an operation of determining/obtaining/configuring/computing/decoding/encoding bit information of a sub-field (SIG, STF, LTF, Data) included in a PPDU; 2) an operation of determining/configuring/obtaining a time resource or frequency resource (e.g., a subcarrier resource) or the like used for the sub-field (SIG, STF, LTF, Data) included the PPDU; 3) an operation of determining/configuring/obtaining a specific sequence (e.g., a pilot sequence, an STF/LTF sequence, an extra sequence applied to SIG) or the like used for the sub-field (SIG, STF, LTF, Data) field included in the PPDU; 4) a power control operation and/or power saving operation applied for the STA; and 5) an operation related to determining/obtaining/configuring/decoding/encoding or the like of an ACK signal. In addition, in the following example, a variety of information used by various STAs for determining/obtaining/configuring/computing/decoding/decoding a TX/RX signal (e.g., information related to a field/subfield/control field/parameter/power or the like) may be stored in the memories 112 and 122 of FIG. 1.

The aforementioned device/STA of the sub-figure (a) of FIG. 1 may be modified as shown in the sub-figure (b) of FIG. 1. Hereinafter, the STAs 110 and 120 of the present disclosure will be described based on the sub-figure (b) of FIG. 1.

For example, the transceivers 113 and 123 illustrated in the sub-figure (b) of FIG. 1 may perform the same function as the aforementioned transceiver illustrated in the sub-figure (a) of FIG. 1. For example, processing chips 114 and 124 illustrated in the sub-figure (b) of FIG. 1 may include the processors 111 and 121 and the memories 112 and 122. The processors 111 and 121 and memories 112 and 122 illustrated in the sub-figure (b) of FIG. 1 may perform the same function as the aforementioned processors 111 and 121 and memories 112 and 122 illustrated in the sub-figure (a) of FIG. 1.

A mobile terminal, a wireless device, a wireless transmit/receive unit (WTRU), a user equipment (UE), a mobile station (MS), a mobile subscriber unit, a user, a user STA, a network, a base station, a Node-B, an access point (AP), a repeater, a router, a relay, a receiving unit, a transmitting unit, a receiving STA, a transmitting STA, a receiving device, a transmitting device, a receiving apparatus, and/or a transmitting apparatus, which are described below, may imply the STAs 110 and 120 illustrated in the sub-figure (a)/(b) of FIG. 1, or may imply the processing chips 114 and 124 illustrated in the sub-figure (b) of FIG. 1. That is, a technical feature of the present disclosure may be performed in the STAs 110 and 120 illustrated in the sub-figure (a)/(b) of FIG. 1, or may be performed only in the processing chips 114 and 124 illustrated in the sub-figure (b) of FIG. 1. For example, a technical feature in which the transmitting STA transmits a control signal may be understood as a technical feature in which a control signal generated in the processors 111 and 121 illustrated in the sub-figure (a)/(b) of FIG. 1 is transmitted through the transceivers 113 and 123 illustrated in the sub-figure (a)/(b) of FIG. 1. Alternatively, the technical feature in which the transmitting STA transmits the control signal may be understood as a technical feature in which the control signal to be transferred to the transceivers 113 and 123 is generated in the processing chips 114 and 124 illustrated in the sub-figure (b) of FIG. 1.

For example, a technical feature in which the receiving STA receives the control signal may be understood as a technical feature in which the control signal is received by means of the transceivers 113 and 123 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (a) of FIG. 1 is obtained by the processors 111 and 121 illustrated in the sub-figure (a) of FIG. 1. Alternatively, the technical feature in which the receiving STA receives the control signal may be understood as the technical feature in which the control signal received in the transceivers 113 and 123 illustrated in the sub-figure (b) of FIG. 1 is obtained by the processing chips 114 and 124 illustrated in the sub-figure (b) of FIG. 1.

Referring to the sub-figure (b) of FIG. 1, software codes 115 and 125 may be included in the memories 112 and 122. The software codes 115 and 126 may include instructions for controlling an operation of the processors 111 and 121. The software codes 115 and 125 may be included as various programming languages.

The processors 111 and 121 or processing chips 114 and 124 of FIG. 1 may include an application-specific integrated circuit (ASIC), other chipsets, a logic circuit and/or a data processing device. The processor may be an application processor (AP). For example, the processors 111 and 121 or processing chips 114 and 124 of FIG. 1 may include at least one of a digital signal processor (DSP), a central processing unit (CPU), a graphics processing unit (GPU), and a modulator and demodulator (modem). For example, the processors 111 and 121 or processing chips 114 and 124 of FIG. 1 may be SNAPDRAGONTM series of processors made by Qualcomm^{®}, EXYNOSTM series of processors made by Samsung^{®}, A series of processors made by Apple^{®}, HELIOTM series of processors made by MediaTek^{®}, ATOMTM series of processors made by Intel^{®} or processors enhanced from these processors.

In the present disclosure, an uplink may imply a link for communication from a non-AP STA to an AP STA, and an uplink PPDU/packet/signal or the like may be transmitted through the uplink. In addition, in the present disclosure, a downlink may imply a link for communication from the AP STA to the non-AP STA, and a downlink PPDU/packet/signal or the like may be transmitted through the downlink.

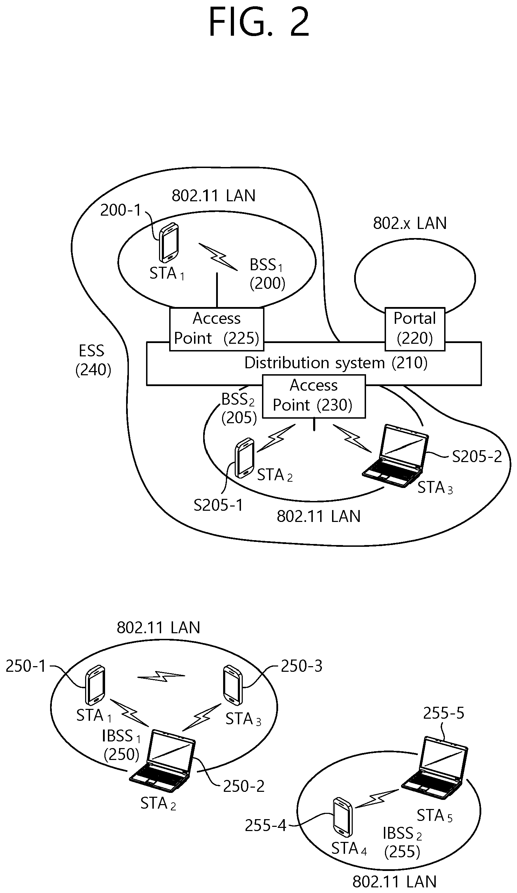

FIG. 2 is a conceptual view illustrating the structure of a wireless local area network (WLAN).

An upper part of FIG. 2 illustrates the structure of an infrastructure basic service set (BSS) of institute of electrical and electronic engineers (IEEE) 802.11.

An upper part of FIG. 2 illustrates the structure of an infrastructure basic service set (BSS) of institute of electrical and electronic engineers (IEEE) 802.11.

Referring the upper part of FIG. 2, the wireless LAN system may include one or more infrastructure BSSs 200 and 205 (hereinafter, referred to as BSS). The BSSs 200 and 205 as a set of an AP and an STA such as an access point (AP) 225 and a station (STA1) 200-1 which are successfully synchronized to communicate with each other are not concepts indicating a specific region. The BSS 205 may include one or more STAs 205-1 and 205-2 which may be joined to one AP 230.

The BSS may include at least one STA, an AP 225, 230 providing a distribution service, and a distribution system (DS) 210 connecting multiple APs.

The distribution system 210 may implement an extended service set (ESS) 240 extended by connecting the multiple BSSs 200 and 205. The ESS 240 may be used as a term indicating one network configured by connecting one or more APs 225 or 230 through the distribution system 210. The AP included in one ESS 240 may have the same service set identification (SSID).

A portal 220 may serve as a bridge which connects the wireless LAN network (IEEE 802.11) and another network (e.g., 802.X).

In the BSS illustrated in the upper part of FIG. 2, a network between the APs 225 and 230 and a network between the APs 225 and 230 and the STAs 200-1, 205-1, and 205-2 may be implemented. However, the network is configured even between the STAs without the APs 225 and 230 to perform communication. A network in which the communication is performed by configuring the network even between the STAs without the APs 225 and 230 is defined as an Ad-Hoc network or an independent basic service set (IBSS).

A lower part of FIG. 2 illustrates a conceptual view illustrating the IBSS.

Referring to the lower part of FIG. 2, the IBSS is a BSS that operates in an Ad-Hoc mode. Since the IBSS does not include the access point (AP), a centralized management entity that performs a management function at the center does not exist. That is, in the IBSS, STAs 250-1, 250-2, 250-3, 255-4, and 255-5 are managed by a distributed manner. In the IBSS, all STAs 250-1, 250-2, 250-3, 255-4, and 255-5 may be constituted by movable STAs and are not permitted to access the DS to constitute a self-contained network.

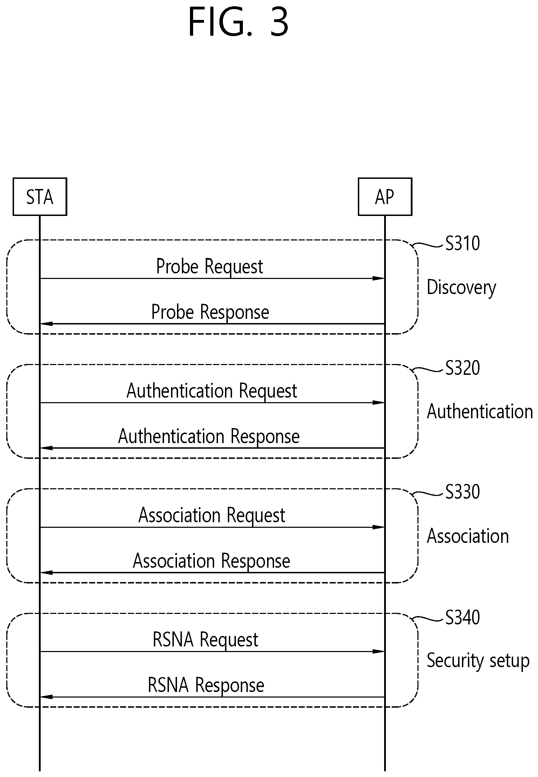

FIG. 3 illustrates a general link setup process.

In S310, a STA may perform a network discovery operation. The network discovery operation may include a scanning operation of the STA. That is, to access a network, the STA needs to discover a participating network. The STA needs to identify a compatible network before participating in a wireless network, and a process of identifying a network present in a particular area is referred to as scanning. Scanning methods include active scanning and passive scanning.

FIG. 3 illustrates a network discovery operation including an active scanning process. In active scanning, a STA performing scanning transmits a probe request frame and waits for a response to the probe request frame in order to identify which AP is present around while moving to channels. A responder transmits a probe response frame as a response to the probe request frame to the STA having transmitted the probe request frame. Here, the responder may be a STA that transmits the last beacon frame in a BSS of a channel being scanned. In the BSS, since an AP transmits a beacon frame, the AP is the responder. In an IBSS, since STAs in the IBSS transmit a beacon frame in turns, the responder is not fixed. For example, when the STA transmits a probe request frame via channel 1 and receives a probe response frame via channel 1, the STA may store BSS-related information included in the received probe response frame, may move to the next channel (e.g., channel 2), and may perform scanning (e.g., transmits a probe request and receives a probe response via channel 2) by the same method.

Although not shown in FIG. 3, scanning may be performed by a passive scanning method. In passive scanning, a STA performing scanning may wait for a beacon frame while moving to channels. A beacon frame is one of management frames in IEEE 802.11 and is periodically transmitted to indicate the presence of a wireless network and to enable the STA performing scanning to find the wireless network and to participate in the wireless network. In a BSS, an AP serves to periodically transmit a beacon frame. In an IBSS, STAs in the IBSS transmit a beacon frame in turns. Upon receiving the beacon frame, the STA performing scanning stores information about a BSS included in the beacon frame and records beacon frame information in each channel while moving to another channel. The STA having received the beacon frame may store BSS-related information included in the received beacon frame, may move to the next channel, and may perform scanning in the next channel by the same method.

After discovering the network, the STA may perform an authentication process in S320. The authentication process may be referred to as a first authentication process to be clearly distinguished from the following security setup operation in S340. The authentication process in S320 may include a process in which the STA transmits an authentication request frame to the AP and the AP transmits an authentication response frame to the STA in response. The authentication frames used for an authentication request/response are management frames.

The authentication frames may include information about an authentication algorithm number, an authentication transaction sequence number, a status code, a challenge text, a robust security network (RSN), and a finite cyclic group.

The STA may transmit the authentication request frame to the AP. The AP may determine whether to allow the authentication of the STA based on the information included in the received authentication request frame. The AP may provide the authentication processing result to the STA via the authentication response frame.

When the STA is successfully authenticated, the STA may perform an association process in S330. The association process includes a process in which the STA transmits an association request frame to the AP and the AP transmits an association response frame to the STA in response. The association request frame may include, for example, information about various capabilities, a beacon listen interval, a service set identifier (SSID), a supported rate, a supported channel, RSN, a mobility domain, a supported operating class, a traffic indication map (TIM) broadcast request, and an interworking service capability. The association response frame may include, for example, information about various capabilities, a status code, an association ID (AID), a supported rate, an enhanced distributed channel access (EDCA) parameter set, a received channel power indicator (RCPI), a received signal-to-noise indicator (RSNI), a mobility domain, a timeout interval (association comeback time), an overlapping BSS scanning parameter, a TIM broadcast response, and a QoS map.

In S340, the STA may perform a security setup process. The security setup process in S340 may include a process of setting up a private key through four-way handshaking, for example, through an extensible authentication protocol over LAN (EAPOL) frame.

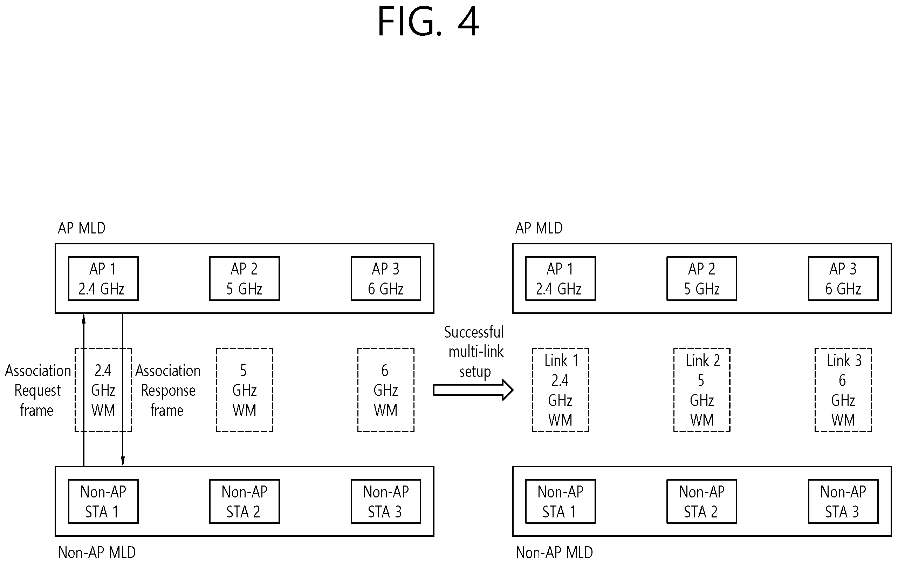

FIG. 4 shows an example of a multi-link (ML).

As illustrated in FIG. 4, multiple multi-link devices (MLDs) can perform communication via a remote link. The MLD can be classified into an AP MLD including multiple AP STAs and a non-AP MLD including multiple non-AP STAs. That is, the AP MLD can include affiliated APs (i.e., AP STAs), and the non-AP MLD can include affiliated STAs (i.e., non-AP STAs, or user-STAs).

The multi-link can include a first link and a second link, and different channels/subchannels/frequency resources can be allocated to the first and second links. The first and second multi-links can be identified through a link ID of 4 bits (or other n bits). The first and second links may be configured in the same 2.4 GHz, 5 GHz, or 6 GHz band. Alternatively, the first link and the second link may be configured in different bands.

The AP MLD of FIG. 4 includes three affiliated APs. In the example of FIG. 4, AP1 may operate in the 2.4 GHz band, AP2 may operate in the 5 GHz band, and AP3 may operate in the 6 GHz band. In the example of FIG. 4, the first link in which AP1 and non-AP1 operate may be defined as a channel/subchannel/frequency resource within the 2.4 GHz band. In addition, in the example of FIG. 4, the second link in which AP2 and non-AP2 operate may be defined as a channel/subchannel/frequency resource within the 5 GHz band. In addition, in the example of FIG. 4, the third link where AP3 and non-AP3 operate can be defined as a channel/subchannel/frequency resource within the 6 GHz band.

In the example of FIG. 4, AP1 can start a multi-link setup procedure (ML setup procedure) by transmitting an association request frame to non-AP STA1. In the example of FIG. 4, non-AP STA1 can transmit an association response frame in response to the association request frame. Each AP (e.g., AP1/2/3) illustrated in FIG. 4 may be identical to the AP illustrated in FIG. 1 and/or FIG. 2, and each non-AP (e.g., non-AP1/2/3) illustrated in FIG. 4 may be identical to the STA (i.e., user-STA or non-AP STA) illustrated in FIG. 1 and/or FIG. 2.

The specific features of the present disclosure are not limited to the specific features of FIG. 4. That is, the number of links can be defined in various ways, and multiple links can be defined in various ways within at least one band.

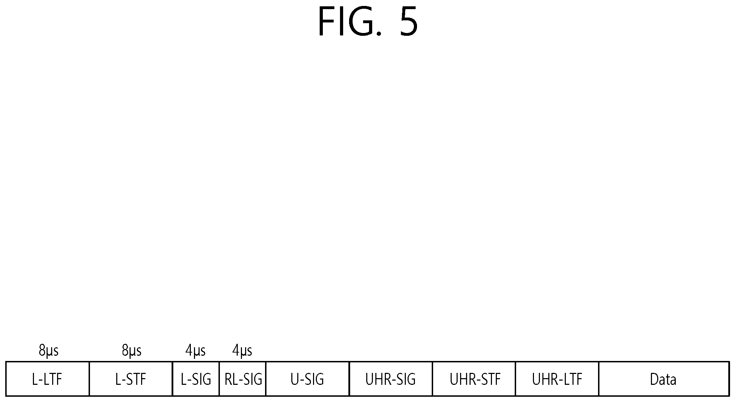

FIG. 5 shows an example of a physical protocol data unit or physical layer (PHY) protocol data unit (PPDU) transmitted/received by an STA of the present disclosure.

An STA (e.g., an AP STA, a non-AP STA, an AP MLD, a non-AP MLD) of the present disclosure can transmit and/or receive a PPDU of FIG. 5. The PPDU described in the present disclosure can have, for example, a structure of FIG. 5. In addition, the PPDU described in the present disclosure can be called by various names such as a transmission PPDU, a reception PPDU, a first type or an N^{th} type PPDU, etc. The PPDU described in the present disclosure can be used in a WLAN system defined according to IEEE 802.11bn and/or a next-generation WLAN system that improves IEEE 802.11bn.

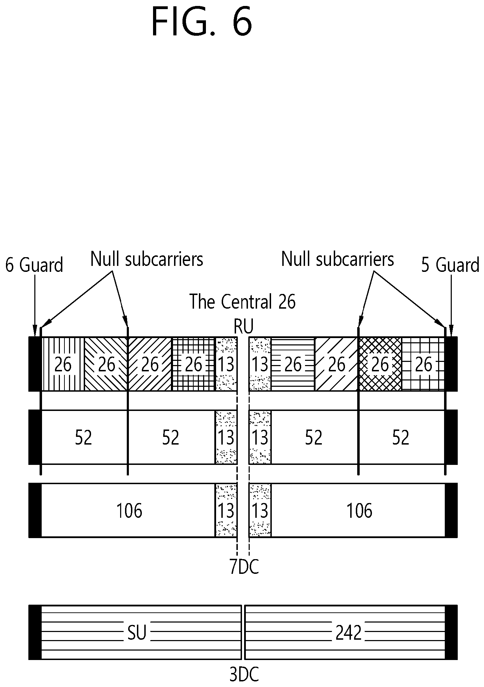

The PPDU of FIG. 5 can be related to various PPDU types used in a UHR system. For example, the example of FIG. 5 can be used for at least one of single-user (SU) mode/type/transmission, multi-user (MU) mode/type/transmission, and null-data packet (NDP) mode/type/transmission related to channel sounding. For example, if the example of FIG. 5 is related to NDP, the data field illustrated can be omitted. If the PPDU of FIG. 5 is used for trigger-based (TB) mode, UHR-SIG of FIG. 6 can be omitted. In other words, an STA that has received a trigger frame for uplink-MU (UL-MU) communication can transmit a PPDU with UHR-SIG omitted in the example of FIG. 5.

In FIG. 5, L-STF or UHR-LTF may be called a preamble or a physical preamble, and may be generated/transmitted/received/acquired/decoded in the physical layer (included in the transmitting/receiving STA).

Each block illustrated in FIG. 5 may be called a field/subfield/signal, etc. The names of these fields/subfields/signals may be legacy short training field (L-STF), legacy long training field (L-LTF), legacy signal (L-SIG), repeated L-SIG (RL-SIG), universal signal (U-SIG), UHR-signal (UHR-SIG), etc., as illustrated in FIG. 5.

A subcarrier spacing of the L-STF, L-LTF, L-SIG, RL-SIG, U-SIG, and UHR-SIG fields of FIG. 5 may be determined as 312.5 kHz, and a subcarrier spacing of the UHR-STF, UHR-LTF, and Data fields may be determined as 78.125 kHz. That is, a tone index (or subcarrier index) of the L-STF, L-LTF, L-SIG, RL-SIG, U-SIG, and UHR -SIG fields may be expressed in unit of 312.5 kHz, and a tone index (or subcarrier index) of the UHR-STF, UHR-LTF, and Data fields may be expressed in unit of 78.125 kHz.

In the PPDU of FIG. 5, the L-LTF and the L-STF may be the same as those in the conventional fields (for example, non-HT LTF and non-HT STF defined in conventional WLAN standards).

The L-SIG field of FIG. 5 may include, for example, bit information of 24 bits. For example, the 24-bit information may include a rate field of 4 bits, a reserved bit of 1 bit, a length field of 12 bits, a parity bit of 1 bit, and a tail bit of 6 bits. For example, the length field of 12 bits may include information related to a length or time duration of a PPDU. For example, the length field of 12 bits may be determined based on a type of the PPDU. For example, when the PPDU is a non-high throughput (HT), high throughput (HT), very high throughput (VHT) PPDU, extremely high throughput (EHT) PPDU or UHR PPDU, a value of the length field may be determined as a multiple of 3. For example, when the PPDU is an HE PPDU, the value of the length field may be determined as "a multiple of 3"+1 or "a multiple of 3"+2. In other words, for the non-HT, HT, VHT PPDI, EHT PPDU or the UHR PPDU, the value of the length field may be determined as a multiple of 3, and for the high efficiency (HE) PPDU, the value of the length field may be determined as "a multiple of 3"+1 or "a multiple of 3"+2. In other words, the LENGTH field in an UHR PPDU is set to a value satisfying the condition that the remainder is zero when LENGTH is divided by 3

For example, the (non-AP and AP) STA may apply BCC encoding based on a 1/2 coding rate to the 24-bit information of the L-SIG field. Thereafter, the transmitting STA may obtain a BCC coding bit of 48 bits. BPSK modulation may be applied to the 48-bit coding bit, thereby generating 48 BPSK symbols. The transmitting STA may map the 48 BPSK symbols to positions except for a pilot subcarrier{subcarrier index -21, -7, +7, +21} and a DC subcarrier{subcarrier index 0}. As a result, the 48 BPSK symbols may be mapped to subcarrier indices -26 to -22, -20 to -8, -6 to -1, +1 to +6, +8 to +20, and +22 to +26. The transmitting STA may additionally map a signal of {-1, -1, -1, 1} to a subcarrier index{-28, -27, +27, +28}. The aforementioned signal may be used for channel estimation in the frequency domain corresponding to {-28, -27, +27, +28}.

For example, the (non-AP and AP) STA may generate an RL-SIG generated in the same manner as the L-SIG. BPSK modulation may be applied to the RL-SIG. The (non-AP and AP) STA may know that the RX PPDU is the HE PPDU, EHT PPDU, or the UHR PPDU, based on the presence of the RL-SIG. In other words, a receiving (non-AP and AP) STA can know that a received PPDU is one of a HE PPDU, an EHT PPDU, and a UHR PPDU if RL-SIG is present. In other words, a receiving (non-AP and AP) STA can know that a received PPDU is one of a non-HT PPDU, an HT PPDU, and a VHT PPDU if RL-SIG is not present. In other words, the RL-SIG field is a repeat of the L-SIG field and is used to differentiate a UHR PPDU from a non-HT PPDU, HT PPDU, and VHT PPDU.

A universal SIG (U-SIG) may be inserted after the RL-SIG of FIG. 6. The U-SIG may be called in various terms such as a first SIG field, a first SIG, a first type SIG, a control signal, a control signal field, a first (type) control signal, common control field, common control signal, or the like.

The U-SIG may include information of N bits, and may include information for identifying a type of the EHT PPDU. For example, the U-SIG may be configured based on two symbols (e.g., two contiguous OFDM symbols). Each symbol (e.g., OFDM symbol) for the U-SIG may have a duration of 4us. Each symbol of the U-SIG may be used to transmit the 26-bit information. For example, each symbol of the U-SIG may be transmitted/received based on 52 data tomes and 4 pilot tones.

Through the U-SIG for example, A-bit information (e.g., 52 un-coded bits) may be transmitted. A first symbol of the U-SIG may transmit first X-bit information (e.g., 26 un-coded bits) of the A-bit information, and a second symbol of the U-SIG may transmit the remaining Y-bit information (e.g. 26 un-coded bits) of the A-bit information. For example, the transmitting STA may obtain 26 un-coded bits included in each U-SIG symbol. The transmitting STA may perform convolutional encoding (i.e., BCC encoding) based on a rate of R=1/2 to generate 52-coded bits, and may perform interleaving on the 52-coded bits. The transmitting STA may perform BPSK modulation on the interleaved 52-coded bits to generate 52 BPSK symbols to be allocated to each U-SIG symbol. One U-SIG symbol may be transmitted based on 65 tones (subcarriers) from a subcarrier index -28 to a subcarrier index +28, except for a DC index 0. The 52 BPSK symbols generated by the transmitting STA may be transmitted based on the remaining tones (subcarriers) except for pilot tones, i.e., tones -21, -7, +7, +21.

For example, the A-bit information (e.g., 52 un-coded bits) generated by the U-SIG may include a CRC field (e.g., a field having a length of 4 bits) and a tail field (e.g., a field having a length of 6 bits). The CRC field and the tail field may be transmitted through the second symbol of the U-SIG. The CRC field may be generated based on 26 bits allocated to the first symbol of the U-SIG and the remaining 16 bits except for the CRC/tail fields in the second symbol, and may be generated based on the conventional CRC calculation algorithm. In addition, the tail field may be used to terminate trellis of a convolutional decoder, and may be set to, for example, '000000'.

The A-bit information (e.g., 52 un-coded bits) transmitted by the U-SIG (or U-SIG field) may be divided into version-independent bits and version-dependent bits. For example, the version-independent bits may have a fixed or variable size. For example, the version-independent bits may be allocated only to the first symbol of the U-SIG, or the version-independent bits may be allocated to both of the first and second symbols of the U-SIG. For example, the version-independent bits and the version-dependent bits may be called in various terms such as a first control bit, a second control bit, or the like.

For example, the version-independent bits of the U-SIG may include a PHY version identifier of 3 bits. For example, the PHY version identifier of 3 bits may include information related to a PHY version of a TX/RX PPDU. For example, a first value of the PHY version identifier of 3 bits (for example, 000 value) may indicate that the TX/RX PPDU is an EHT PPDU. Also, a second value of the PHY version identifier of 3 bits (for example, 001 value) may indicate that the TX/RX PPDU is a UHR PPDU.

In other words, when the (AP/non-AP) STA transmits an EHT PPDU, the 3-bit PHY version identifier can be set to the first value, and when the (AP/non-AP) STA transmits a UHR PPDU, the 3-bit PHY version identifier can be set to the second value. In other words, the receiving (AP/non-AP) STA can determine that the received PPDU is an EHT PPDU based on the PHY version identifier having the first value, and can determine that the received PPDU is a UHR PPDU based on the PHY version identifier having the second value.

For example, the version-independent bits of the U-SIG may include a UL/DL flag field of 1 bit. A first value of the UL/DL flag field of 1 bit relates to UL communication, and a second value of the UL/DL flag field relates to DL communication.

For example, the version-independent bits of the U-SIG may include information related to a transmission opportunity (TXOP) length and information related to a BSS color ID.

For example, if a UHR PPDU is classified into various types (e.g., type related to SU transmission (performed based on UL or DL), type related to DL transmission, type related to NDP transmission, type related to DL non-MU-MIMO, type related to DL MU-MIMO, type related to multi-AP operation, type related to coordinated beamforming (Co-BF), spatial reuse (SR), type related to coordinated OFDMA (C-OFDMA), type related to coordinated TDMA (Co-TDMA)), information about the type of the UHR PPDU (e.g., 2-bit or 3-bit information) can be included in the version-dependent bits of the U-SIG.

For example, the U-SIG may include: 1) a bandwidth field including information related to a bandwidth; 2) a field including information related to an modulation and coding scheme (MCS) applied to UHR-SIG; 3) an indication field including information regarding whether a dual subcarrier modulation (DCM) scheme is applied to UHR-SIG; 4) a field including information related to the number of symbol used for UHR-SIG; 5) a field including information regarding whether the UHR-SIG is generated across a full band; 6) a field including information related to a type of UHR-LTF/STF; and 7) information related to a field indicating an UHR-LTF length and a CP length.

Preamble puncturing may be applied to the PPDU of FIG. 5. The preamble puncturing implies that puncturing is applied to part (e.g., a secondary 20 MHz band) of the full band. For example, when an 80 MHz PPDU is transmitted, an STA may apply puncturing to the secondary 20 MHz band out of the 80 MHz band, and may transmit a PPDU only through a primary 20 MHz band and a secondary 40 MHz band.

For example, a pattern of the preamble puncturing may be configured in advance. For example, when a first puncturing pattern is applied, puncturing may be applied only to the secondary 20 MHz band within the 80 MHz band. For example, when a second puncturing pattern is applied, puncturing may be applied to only any one of two secondary 20 MHz bands included in the secondary 40 MHz band within the 80 MHz band. For example, when a third puncturing pattern is applied, puncturing may be applied to only the secondary 20 MHz band included in the primary 80 MHz band within the 160 MHz band (or 80+80 MHz band). For example, when a fourth puncturing is applied, puncturing may be applied to at least one 20 MHz channel not belonging to a primary 40 MHz band in the presence of the primary 40 MHz band included in the 80MHaz band within the 160 MHz band (or 80+80 MHz band).

Information related to the preamble puncturing applied to the PPDU may be included in U-SIG and/or UHR-SIG. For example, a first field of the U-SIG may include information related to a contiguous bandwidth, and second field of the U-SIG may include information related to the preamble puncturing applied to the PPDU.

For example, the U-SIG and the UHR-SIG may include the information related to the preamble puncturing, based on the following method. When a bandwidth of the PPDU exceeds 80 MHz, the U-SIG may be configured individually in unit of 80 MHz. For example, when the bandwidth of the PPDU is 160 MHz, the PPDU may include a first U-SIG for a first 80 MHz band and a second U-SIG for a second 80 MHz band. In this case, a first field of the first U-SIG may include information related to a 160 MHz bandwidth, and a second field of the first U-SIG may include information related to a preamble puncturing (i.e., information related to a preamble puncturing pattern) applied to the first 80 MHz band. In addition, a first field of the second U-SIG may include information related to a 160 MHz bandwidth, and a second field of the second U-SIG may include information related to a preamble puncturing (i.e., information related to a preamble puncturing pattern) applied to the second 80 MHz band. Meanwhile, an UHR-SIG contiguous to the first U-SIG may include information related to a preamble puncturing applied to the second 80 MHz band (i.e., information related to a preamble puncturing pattern), and an UHR-SIG contiguous to the second U-SIG may include information related to a preamble puncturing (i.e., information related to a preamble puncturing pattern) applied to the first 80 MHz band.

Additionally or alternatively, the U-SIG and the UHR-SIG may include the information related to the preamble puncturing, based on the following method. The U-SIG may include information related to a preamble puncturing (i.e., information related to a preamble puncturing pattern) for all bands. That is, the UHR-SIG may not include the information related to the preamble puncturing, and only the U-SIG may include the information related to the preamble puncturing (i.e., the information related to the preamble puncturing pattern).

The U-SIG may be configured in unit of 20 MHz. For example, when an 80 MHz PPDU is configured, the U-SIG may be duplicated. That is, four identical U-SIGs may be included in the 80 MHz PPDU. PPDUs exceeding an 80 MHz bandwidth may include different U-SIGs.

The UHR-SIG of FIG. 5 may include control information for the receiving STA. The UHR-SIG may be transmitted through at least one symbol, and one symbol may have a length of 4us. Information related to the number of symbols used for the UHR-SIG may be included in the U-SIG.

UHR-SIG provides an additional signal to the U-SIG field to enable STA to interpret/decode UHR PPDU. UHR-SIG field may include U-SIG overflow bits that are commonly applied to all users. In addition, UHR-SIG field includes resource allocation information, so that STA can look-up resources used in fields including data field/UHR-STF/UHR-LTF (i.e., UHR modulated fields of a UHR PPDU).

Frequency resources of UHR-LTF, UHR-STF, and data fields illustrated in FIG. 5 may be determined based on RUs (resource units) defined by multiple subcarriers/tones. That is, UHR-LTF, UHR-STF, and data fields of the present disclosure may be transmitted/received through RUs (resource units) defined by multiple subcarriers/tones.

FIG. 6 is a diagram illustrating the layout of resource units (RUs) used for a 20 MHz PPDU. That is, the UHR-LTF, UHR-STF, and/or data fields included in the 20 MHz PPDU may be transmitted/received through at least one of the various RUs defined in FIG. 6.

As illustrated in the uppermost part of FIG. 6, a 26-unit (i.e., a unit corresponding to 26 tones) may be disposed. Six tones may be used for a guard band in the leftmost band of the 20 MHz band, and five tones may be used for a guard band in the rightmost band of the 20 MHz band. Further, seven DC tones may be inserted in a center band, that is, a DC band, and a 26-unit corresponding to 13 tones on each of the left and right sides of the DC band may be disposed. A 26-unit, a 52-unit, and a 106-unit may be allocated to other bands. Each unit may be allocated for a receiving STA, that is, a user.

Meanwhile, the layout of the RUs in FIG. 6 may be used not only for a multiple users (MUs) but also for a single user (SU), in which case one 242-unit may be used and three DC tones may be inserted as illustrated in the lowermost part of FIG. 6.

Although FIG. 6 proposes RUs having various sizes, that is, a 26-RU, a 52-RU, a 106-RU, and a 242-RU, specific sizes of RUs may be extended or increased. Therefore, the present embodiment is not limited to the specific size of each RU (i.e., the number of corresponding tones). In this specification, N-RU may be represented as N-tone RU, etc. For example, 26-RU may be represented as 26-tone RU.

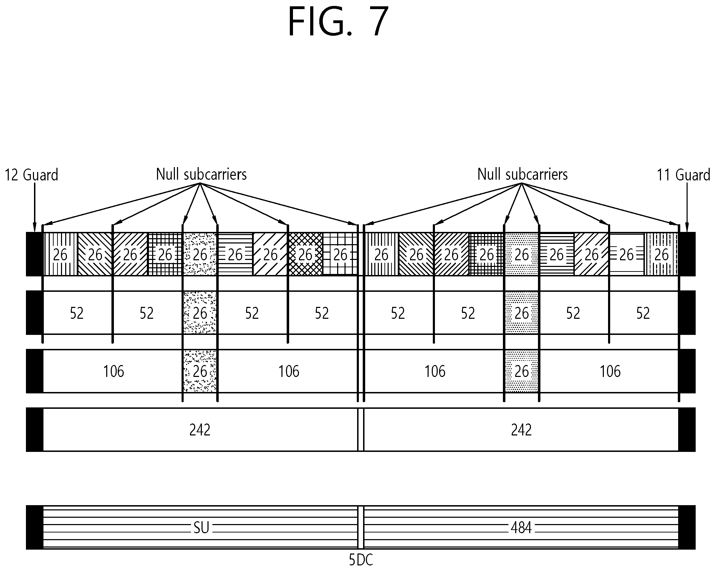

FIG. 7 is a diagram illustrating the layout of resource units (RUs) used for 40MHz PPDU.

Similarly to FIG. 6 in which RUs having various sizes are used, a 26-RU, a 52-RU, a 106-RU, a 242-RU, a 484-RU, and the like may be used in an example of FIG. 7. Further, five DC tones may be inserted in a center frequency, 12 tones may be used for a guard band in the leftmost band of the 40 MHz band, and 11 tones may be used for a guard band in the rightmost band of the 40 MHz band.

As illustrated in FIG. 7, when the layout of the RUs is used for a single user, a 484-RU may be used. The specific number of RUs may be changed similarly to FIG. 6.

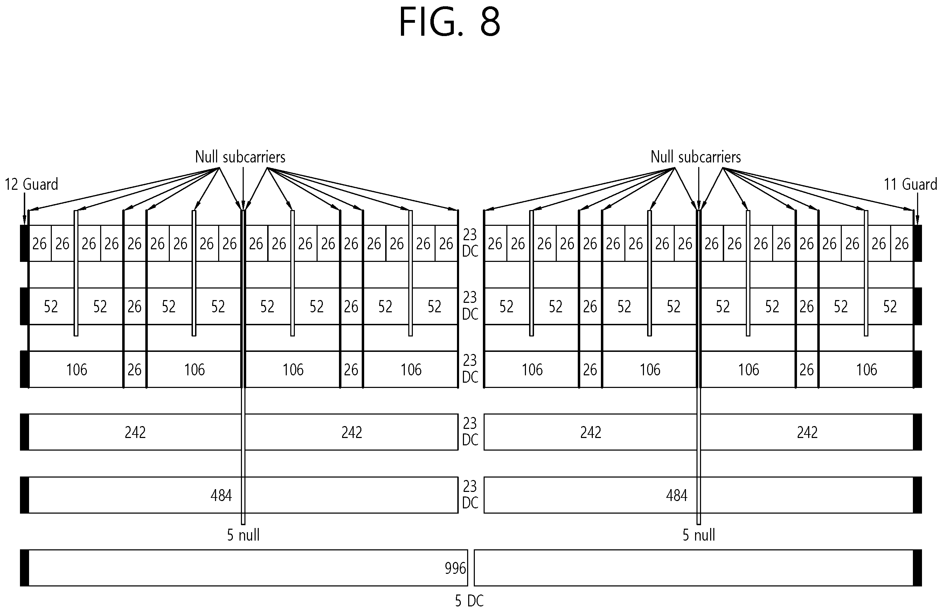

FIG. 8 is a diagram illustrating the layout of resource units (RUs) used for an 80MHz PPDU. The layout of resource units (RUs) used in this specification may vary. For example, the layout of resource units (RUs) used in the 80MHz band may vary.

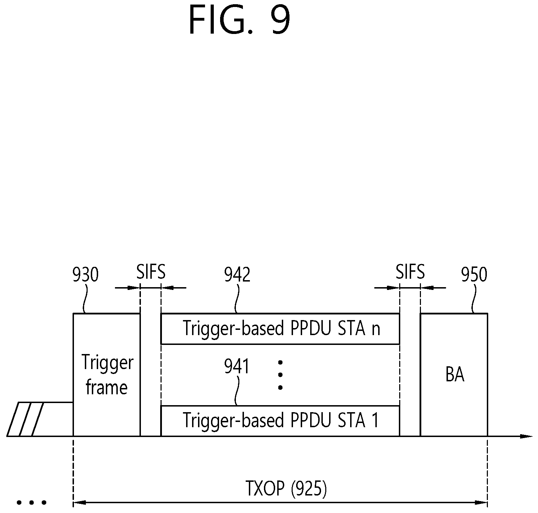

FIG. 9 shows an operation related to UL-MU. As illustrated, a transmitting STA (e.g., AP) can perform channel access through contending (i.e., backoff operation) and transmit a trigger frame (930). That is, the transmitting STA (e.g., AP) can transmit a PPDU including a trigger frame (930). When a PPDU including a trigger frame is received, a TB (trigger-based) PPDU is transmitted after a delay of SIFS.

TB PPDUs (941, 942) are transmitted at the same time and can be transmitted from multiple STAs (e.g., User STAs) whose AIDs are indicated in the Trigger frame (930). The ACK frame (950) for the TB PPDU can be implemented in various forms.

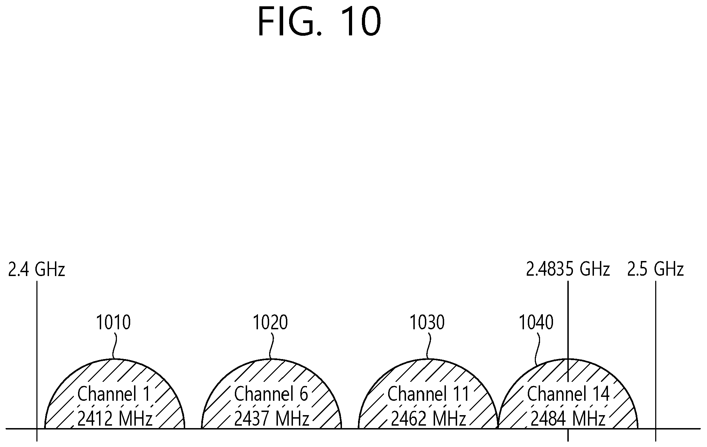

FIG. 10 illustrates an example of channels used/supported/defined within the 2.4 GHz band.

The 2.4 GHz band may also be referred to by other names, such as "first band." Furthermore, the 2.4 GHz band may refer to a frequency range in which channels with center frequencies adjacent to 2.4 GHz (e.g., channels with center frequencies between 2.4 and 2.5 GHz) are used/supported/defined.

The 2.4 GHz band may include multiple 20 MHz channels. The 20 MHz within the 2.4 GHz band may have multiple channel indices (e.g., indices 1 through 14). For example, the center frequency of a 20 MHz channel assigned channel index 1 may be 2.412 GHz, the center frequency of a 20 MHz channel assigned channel index 2 may be 2.417 GHz, and the center frequency of a 20 MHz channel assigned channel index N may be (2.407 + 0.005*N) GHz. The channel indices may be referred to by various names, such as channel numbers. The specific numerical values of the channel indices and center frequencies may change.

FIG. 10 exemplarily illustrates four channels within the 2.4 GHz band. The illustrated first frequency region (1010) to fourth frequency region (1040) may each include one channel. For example, the first frequency region (1010) may include channel 1 (a 20 MHz channel having an index of 1). In this case, the center frequency of channel 1 may be set to 2412 MHz. The second frequency region (1020) may include channel 6. In this case, the center frequency of channel 6 may be set to 2437 MHz. The third frequency region (1030) may include channel 11. In this case, the center frequency of channel 11 may be set to 2462 MHz. The fourth frequency region (1040) may include channel 14. In this case, the center frequency of channel 14 may be set to 2484 MHz.

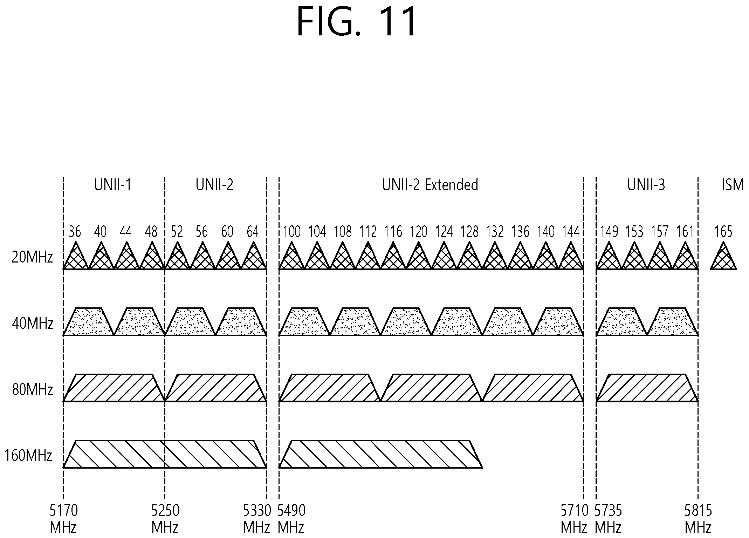

FIG. 11 illustrates an example of channels used/supported/defined within the 5 GHz band.

The 5 GHz band may be referred to by other names, such as a second band/band, etc. The 5 GHz band may refer to a frequency range in which channels with center frequencies greater than or equal to 5 GHz and less than 6 GHz (or less than 5.9 GHz) are used/supported/defined. Alternatively, the 5 GHz band may include multiple channels between 4.5 GHz and 5.5 GHz. The specific figures shown in FIG. 11 are subject to change.

Multiple channels within the 5 GHz band include Unlicensed National Information Infrastructure (UNII)-1, UNII-2, UNII-3, and ISM. UNII-1 may be referred to as UNII Low. UNII-2 may include frequency ranges called UNII Mid and UNII-2Extended. UNII-3 may be referred to as UNII-Upper.

Within the 5 GHz band, multiple channels can be configured, and the bandwidth of each channel can be variously configured, such as 20 MHz, 40 MHz, 80 MHz, or 160 MHz. For example, the 5170 MHz to 5330 MHz frequency domain/range within UNII-1 and UNII-2 can be divided into eight 20 MHz channels. The 5170 MHz to 5330 MHz frequency domain/range can be divided into four channels through a 40 MHz frequency domain. The 5170 MHz to 5330 MHz frequency domain/range can be divided into two channels through an 80 MHz frequency domain. Alternatively, the 5170 MHz to 5330 MHz frequency domain/range can be divided into one channel through a 160 MHz frequency domain.

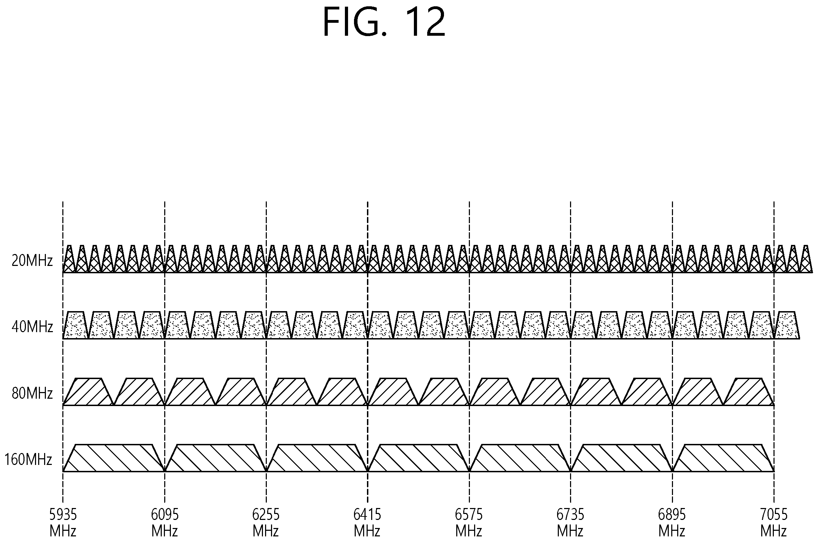

FIG. 12 illustrates an example of channels used/supported/defined within the 6 GHz band.

The 6 GHz band may be referred to by other names, such as the third band/band. The 6 GHz band may refer to a frequency range where channels with center frequencies higher than 5.9 GHz are used, supported, and defined. The specific values shown in FIG. 12 are subject to change.

For example, the 20 MHz channel in FIG. 12 may be defined starting from 5.940 GHz. Specifically, the leftmost channel among the 20 MHz channels in FIG. 12 may have an index of 1 (or channel index, channel number, etc.) and be assigned a center frequency of 5.945 GHz. In other words, the center frequency of channel index N may be determined as (5.940 + 0.005*N) GHz.

Accordingly, the indexes (or channel numbers) of the 20 MHz channels of FIG. 12 may be 1, 5, 9, 13, 17, 21, 25, 29, 33, 37, 41, 45, 49, 53, 57, 61, 65, 69, 73, 77, 81, 85, 89, 93, 97, 101, 105, 109, 113, 117, 121, 125, 129, 133, 137, 141, 145, 149, 153, 157, 161, 165, 169, 173, 177, 181, 185, 189, 193, 197, 201, 205, 209, 213, 217, 221, 225, 229, 233. Also, according to the (5.940 + 0.005*N) GHz rule mentioned above, the indexes of the 40 MHz channels in FIG. 12 may be 3, 11, 19, 27, 35, 43, 51, 59, 67, 75, 83, 91, 99, 107, 115, 123, 131, 139, 147, 155, 163, 171, 179, 187, 195, 203, 211, 219, 227.

Hereinafter, the structure and type/subtype of MAC frame are described.

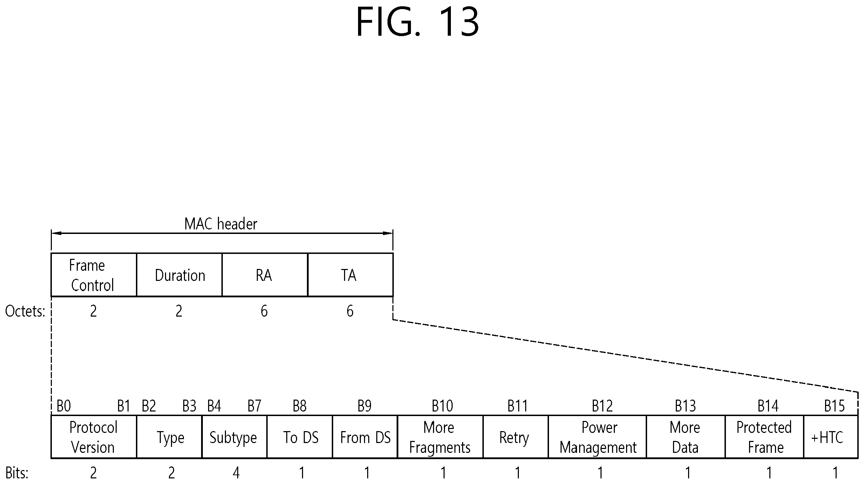

FIG. 13 shows an example of a header of a MAC frame. As shown, the MAC frame can include a frame control field/information of 2 octets in length, a duration field/information of 2 octets in length, an receiver address (RA) field/information of 6 octets in length, and a transmitter address (TA) field/information of 6 octets in length. As shown in FIG. 13, the four fields can be consecutive to each other. The MAC header of FIG. 13 can be modified in various ways, and a new field can be inserted between the four fields shown, or at least one of the fields shown can be omitted.

The MAC header shown in FIG. 13 can be located at the very front of the MAC frame. That is, the MAC frame may include a MAC header as in FIG. 13 and a MAC body field/information that is continuous to the MAC header. The MAC frame including the MAC header of FIG. 13 is inserted/included in the data field of the PPDU (e.g., UHR PPDU) illustrated in FIG. 5.

The MAC frame included in the data field of the PPDU of this disclosure may be classified into various types. For example, the MAC frame of this disclosure may be classified into a control frame, a management frame, and a data frame.

For example, the management frame includes association request, association response, reassociation request, reassociation response, probe request, probe response, beacon, disassociation, authentication, and deauthentication frames/signals defined in the conventional WLAN. For the management frame, the values of the type fields (B3 and B2) of FIG. 8 are set to 00. Also, the values of the subtype fields (B7, B6, B5, B4) of FIG. 8 are as follows: association request (0000), association response (0001), reassociation request (0010), reassociation response (0011), probe request (0100), probe response (0101), beacon (1000), disassociation (1010), authentication (1011), deauthentication (1100).

For example, the control frame includes trigger beamforming report poll, NDP announcement (NDPA), control frame extension, control wrapper, block Ack request (BlockAckReq), Block Ack (BlockAck), PS-Poll, RTS, CTS, Ack, CF-end frames/signals defined in conventional WLAN. For the control frame, the values of the type fields (B3 and B2) of FIG. 8 are set to 01. Also, the values of the subtype fields (B7, B6, B5, B4) of FIG. 8 are as follows: trigger (0010), beamforming report poll (0100), NDP announcement (0101), control frame extension (0110), control wrapper (0111), BlockAckReq (1000), BlockAck (1001), PS-Poll (1010), RTS (1011), CTS (1100), Ack (1101), CF-End (1110).

For example, the data frame includes (QoS) Data, (QoS) Null, etc. defined in the conventional WLAN. For the management frame, the values of the type fields (B3 and B2) of FIG. 13 are set to 10.

The MAC frame/signal used in this disclosure can be identified through the type field/information and subtype field/information described above. For example, a "trigger frame" in this disclosure may mean a MAC frame in which the type bits B3 and B2 bits in the frame control field of the MAC header are set to 01, and the subtype bits B7, B6, B5, and B4 bits in the frame control field are set to 0010. Various MAC frames described in this disclosure are inserted/included in the data fields of various PPDUs (e.g., HE/VHT/HE/EHT/UHR PPDUs).

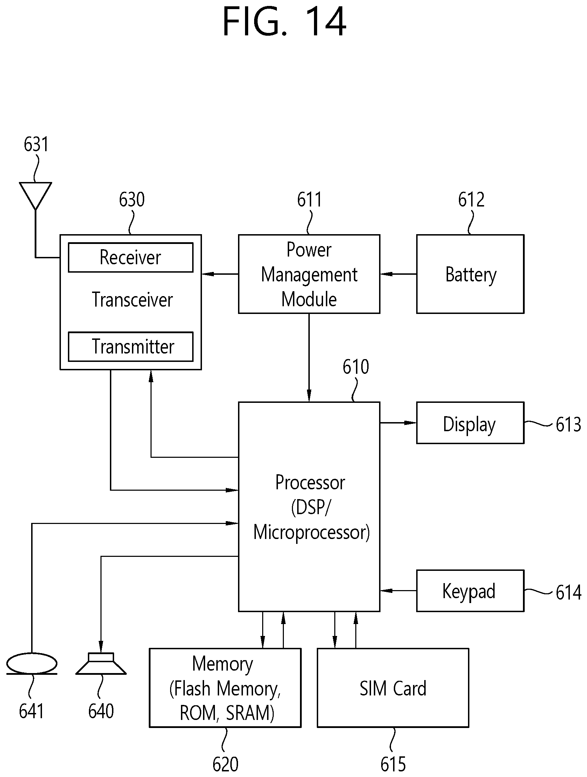

FIG. 14 shows a modified example of a transmitting device and/or a receiving device of the present disclosure.

The devices (e.g., AP STA, non-AP STA) shown in FIGS. 1 to 4 can be modified as shown in FIG. 14. The transceiver 630 of FIG. 14 can be identical to the transceiver 113, 123 of FIG. 1. The transceiver 630 of FIG. 14 can include a receiver and a transmitter.

The processor 610 of FIG. 14 can be identical to the processor 111, 121 of FIG. 1. Alternatively, the processor 610 of FIG. 14 can be identical to the processing chip 114, 124 of FIG. 1.

The memory 150 of FIG. 14 may be the same as the memory 112, 122 of FIG. 1. Alternatively, the memory 150 of FIG. 14 may be a separate external memory different from the memory 112, 122 of FIG. 1.

Referring to FIG. 14, the power management module 611 manages power for the processor 610 and/or the transceiver 630. The battery 612 supplies power to the power management module 611. The display 613 outputs the result processed by the processor 610. The keypad 614 receives input to be used by the processor 610. The keypad 614 may be displayed on the display 613. The SIM card 615 may be an integrated circuit used to securely store an international mobile subscriber identity (IMSI) and its associated keys, which are used to identify and authenticate subscribers in mobile devices such as mobile phones and computers.

Referring to FIG. 14, the speaker (640) may output sound-related results processed by the processor 610. The microphone (641) may receive sound-related input to be used by the processor 610.

### 1. Problems of Conventional Technology (Fast BSS Transition (FT))

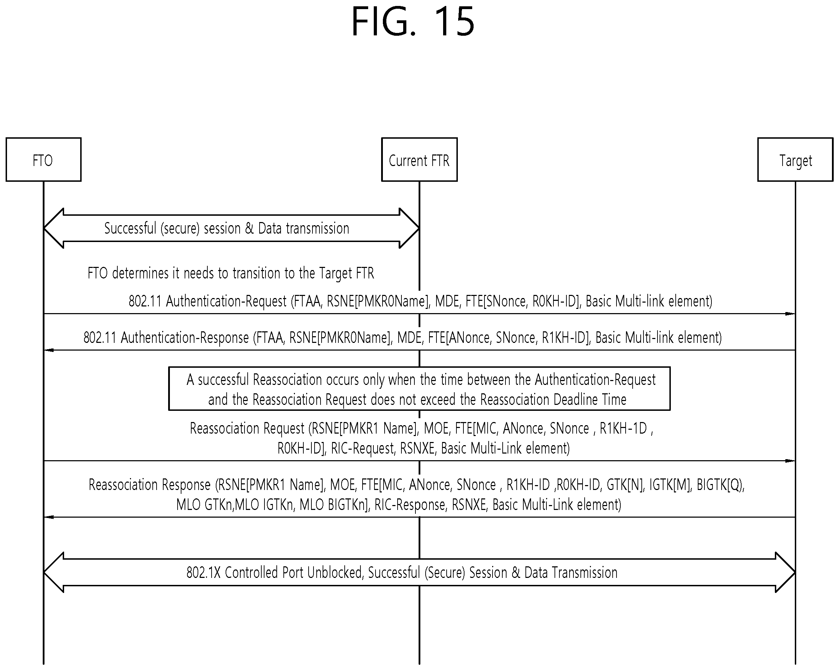

FIG. 15 illustrates an Over-The-Air (OTA) FT protocol in a Robust Security Network (RSN).

Currently, in 802.11, based on a non-AP STA moving (roaming), for example, performing basic service set (BSS) transition from an access point (AP) (Old AP) to another AP (New AP), a reassociation process must be performed in the same mobility domain. A representative example is the fast BSS transition (FT) technology. In FT, as shown in FIG. 15, various processes such as authentication and reassociation are performed with an FT originator (FTO) and a target FT responder (FTR) (for example, a New AP).

After this process, many operational parameters such as agreement, sequence number (SN), enhanced distributed channel access function (EDCAF) parameter, and the like related to block acknowledgment (BA), stream classification service (SCS), and the like are reset. Accordingly, there is an overhead of having to perform agreement/configuration again along with several frame exchanges, and data loss during the FT process may also occur. In addition, seamless roaming, for example, roaming without disconnection from the perspective of a non-AP STA, is not easy. Therefore, the present specification proposes a seamless roaming method utilizing an access point multi-link device (AP MLD) to solve this. Unlike FT, authentication/association processes are not performed again in roaming.

In the present specification, a STA performing BSS transition (for example, roaming) is referred to as an RSTA, and an AP to which the STA is currently associated based on the STA roaming is referred to as an Old AP (O_AP), and an AP to which the STA is to roam is referred to as a New AP (N_AP). In addition, a roaming method proposed in the present specification is referred to as MLD roaming. Designations (names) in the present specification may be changed, and a STA may include an AP STA or a non-AP STA.

### 2. UHR AP MLD Structure for Roaming

### 2.1 General Procedure of Roaming in AP MLD

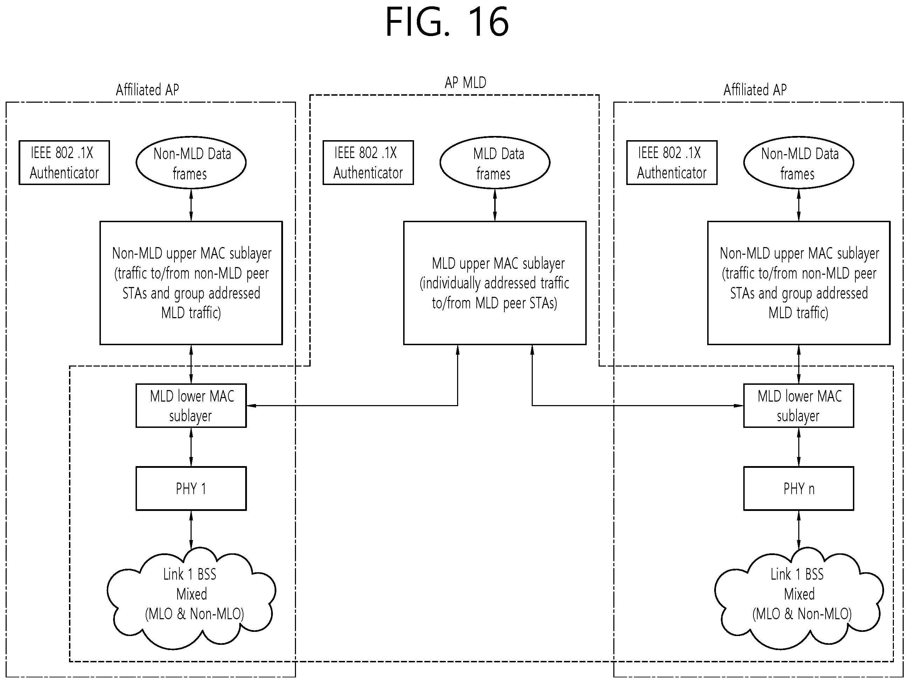

FIG. 16 illustrates a high-level architecture for an AP MLD.

Basically, an access point multi-link device (AP MLD) may include one or more APs, and has a High-level Architecture as shown in FIG. 16. Basically, an MLD may control various procedures/parameters commonly corresponding to multiple APs using an upper medium access control (MAC) sublayer. For example, the corresponding procedures/parameters include authentication, association, sequence number/packet number (SN/PN) assignment, Power save buffering of individually addressed frames and the like.

Therefore, based on using AP MLD functionality, MLD-level parameters may be maintained without being reset based on moving between APs affiliated with the AP MLD (affiliated APs). The present specification proposes an MLD roaming method utilizing the functionality of the AP MLD.

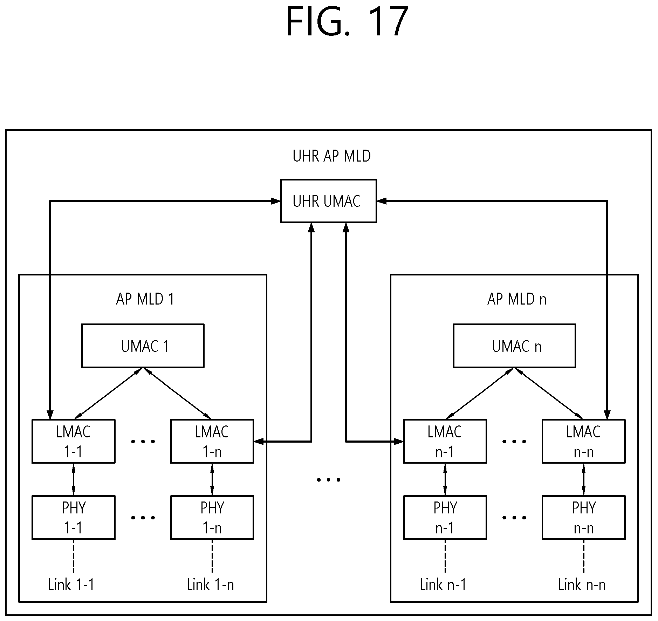

FIG. 17 illustrates an example of a high-level architecture for a UHR AP MLD.

FIG. 17 shows an architecture of access points (APs) supporting seamless roaming. In order to support seamless roaming, compatibility with devices of previous standard versions must be maintained, and seamless roaming between many devices may be performed. First, in order to guarantee legacy compatibility with previous devices, non-ultra high reliability non-access point stations (non-UHR non-AP STAs) must be able to see non-UHR APs. To do so, a definition of a multi-link device (MLD) itself should not be violated and a conventional architecture should not be changed. Therefore, as shown in FIG. 17, a UHR AP MLD affiliating MLDs capable of hierarchical seamless roaming while maintaining the conventional MLD architecture is newly defined. At this time, each lower medium access control (LMAC) of the AP MLDs is interfaced with a UHR upper MAC (UHR UMAC), and functions of the UMAC of the AP MLD performing seamless roaming are managed by the UHR UMAC. Such an architecture may also solve a scalability issue due to a limit of a bit size of a link ID. Basically, a link ID is 4 bits and may support only a maximum of 16 link IDs. In roaming, this link ID is required to move from one link to another, and in a conventional scheme, the number of APs capable of roaming is limited to 16. To solve this, the scalability issue is solved by grouping link IDs with an AP MLD ID. This is described in more detail in 2.2 to be described later.

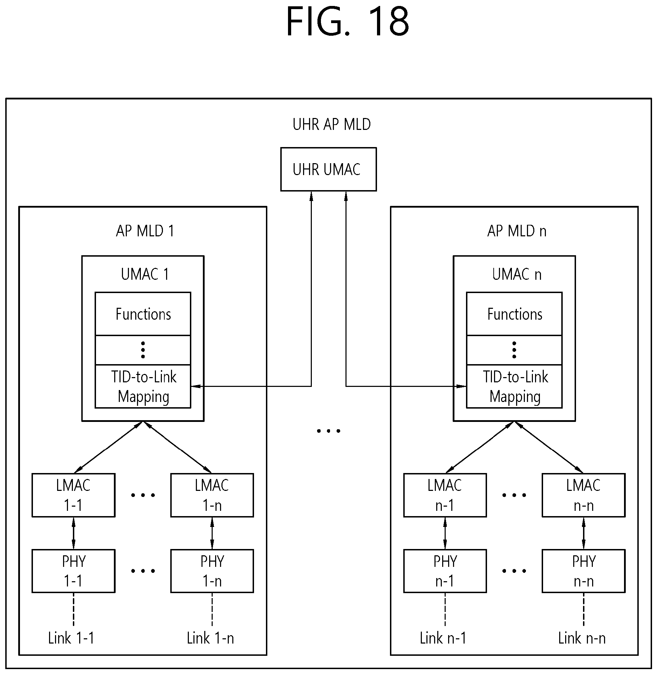

FIG. 18 illustrates another example of a high-level architecture for a UHR AP MLD.

FIG. 18 takes an architecture similar to FIG. 17 but shows another example in which interfacing is different. In FIG. 18, a lower medium access control (LMAC) of an AP MLD and a UHR UMAC are not directly connected, but are interfaced to traffic identifier-to-link mapping (TID-to-link mapping) among functions of the UMAC. Based on such an architecture, TID-to-link mapping may be individually performed in the UMAC of the AP MLD or may be performed in the UHR UMAC. A utilization scheme for this architecture and the types and number of functions interfaced with the UHR UMAC are not limited.

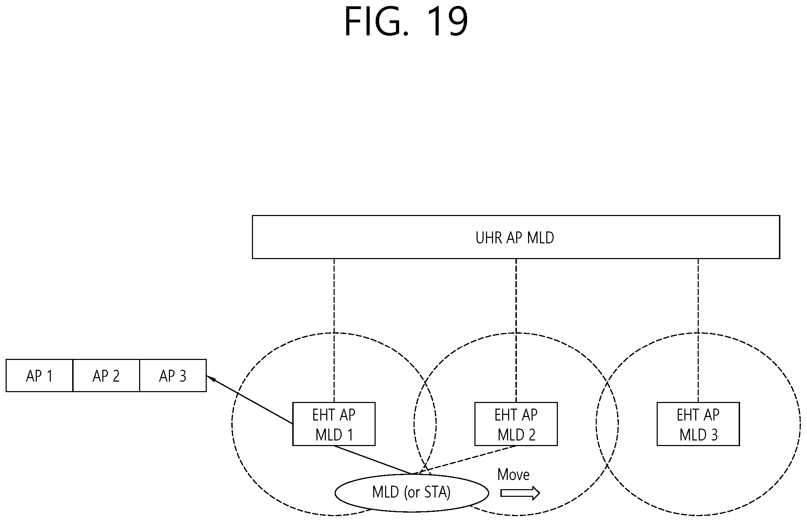

FIG. 19 illustrates an example of a UHR AP MLD structure for Roaming.

Referring to FIG. 19, each EHT AP MLD is located at a different position, for example, non-collocated, and APs belonging to each EHT AP MLD are collocated at the same or a similar position, for example, collocated. This collocated may mean belonging to completely the same physical device, or may be expressed as logically similar position 'collocated' even if not belonging to a physical device. Basically, because an AP MLD is a logical entity, it may be a certain physical device, but it covers affiliated APs regardless of position and may operate as an MLD to which a multi-link operation (MLO) may be applied. Consequently, APs belonging to each EHT AP MLD all become affiliated APs of one UHR AP MLD. For example, EHT AP MLD 1 of FIG. 19 includes affiliated APs 1, 2 and 3.

Based on FIG. 19, usually, when an MLD (or STA) moves, it will perform roaming from one EHT AP MLD to another EHT AP MLD. However, movement only between different EHT AP MLDs is not necessarily considered as roaming. For example, an AP may be changed through roaming even within one EHT AP MLD.

Meanwhile, a moving MLD (or STA) should be able to recognize to which AP within a UHR AP MLD to which it is connected it should perform roaming based on this structure, and based on requesting roaming, the UHR AP MLD should be able to know whether the old AP should deliver data or management information to a new AP based on from which old AP to which new AP it moves. Therefore, identification for this is required. The present specification proposes an identification method considering non-collocated affiliated APs in a UHR AP MLD.

Designations (names) in the present specification may be changed, and a STA may include an AP STA or a non-AP STA.

### 3. UHR AP MLD Indicator for Roaming

Basically, because roaming may be performed between APs affiliated with the same UHR AP MLD, in order for a non-AP STA to know whether an AP is an AP that may perform roaming, when a currently connected AP announces information on neighboring APs to the non-AP STA, it should provide information on whether they are affiliated with the same UHR AP MLD. The present specification proposes a method of delivering this through a Basic ML element and an RNR element. Based on checking whether an AP is an AP that may perform roaming before the non-AP STA requests roaming through a UHR AP MLD indicator, roaming may be requested, thereby preventing information on APs that may not perform roaming from being requested, which can block unnecessary use of resources.

### 3.1 Usage of Same UHR AP MLD Indication: Announcement

Each AP of each AP MLD may announce whether roaming proposed in the present specification is possible, an indicator of whether they are affiliated with the same UHR AP MLD, an EHT AP MLD ID and the like. Related information is as follows and may include at least one or more.
- MLD Roaming enabled: An indicator on whether roaming is possible. (E.g., indicated by 1 bit)
- Same UHR AP MLD indicator: An indicator on whether a non-AP STA is affiliated with the same UHR AP MLD as a currently connected AP. (E.g., indicated by 1 bit)

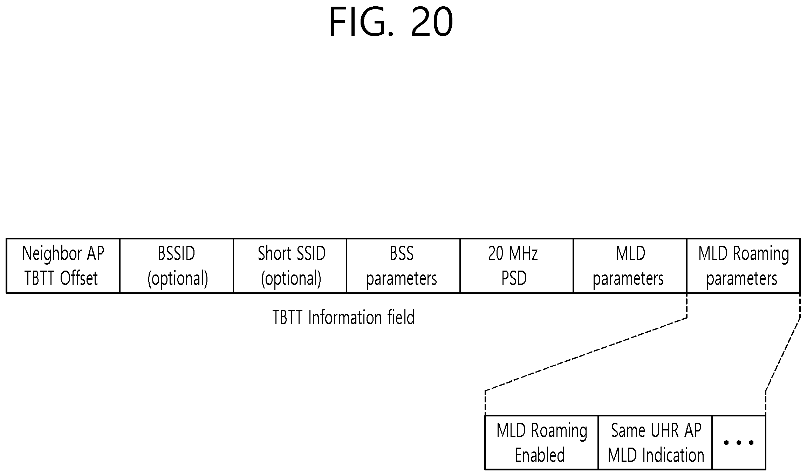

The above information may be included in a Management (MGMT) frame such as a Beacon or a Probe Response, and may be included in an MLD Roaming IE including new MLD Roaming information or a conventional Reduced Neighbor Report (RNR) IE. FIG. 20 is an example based on being capable of being included in the RNR IE. Basically, for each AP, information may be included in a TBTT Information field.

FIG. 20 illustrates an example of an RNR IE including MLD Roaming information.

Based on the size of a conventional MLD Parameters subfield not being sufficient as in FIG. 20, a new MLD Roaming Parameters subfield may be created to include information. Although a conventional size may be changed, this may cause a decoding issue to an 802.11be STA. In particular, based on this case, because inclusion of the MLD Roaming Parameters itself may mean that MLD roaming is possible, MLD Roaming Enabled may not be included.

For example, based on a bit of a Same UHR AP MLD indicator being set to 1, it means being affiliated with the same UHR AP MLD, so roaming may be performed. Based on the bit being set to 0, it means being affiliated with another UHR AP MLD, so roaming may not be performed. As another example, based on a bit of a Same UHR AP MLD indicator being set to 0, it means being affiliated with the same UHR AP MLD, so roaming may be performed. Based on the bit being set to 1, it means being affiliated with another UHR AP MLD, so roaming may not be performed. As another example, a bit of a Same UHR AP MLD indicator may be set to various values to indicate whether it is affiliated with the same UHR AP MLD.

Because this information is also MLD-related information, it may be included in a Basic Multi-link IE. The following is information related to a Basic Multi-link IE.

### 3.2 Usage of Same UHR AP MLD Indication: Request/Response

Before Roaming, a non-AP MLD (STA) may request information on an AP in each EHT AP MLD for Roaming within an AP MLD. Basically, this may use a multi-link probe request/response utilized for obtaining information in an ML operation (MLO).

A multi-link probe request includes a Probe Request ML IE, and a UHR AP MLD ID may be included in this IE using at least one or more methods as follows.

### 1) Based on being included in a Common Info field

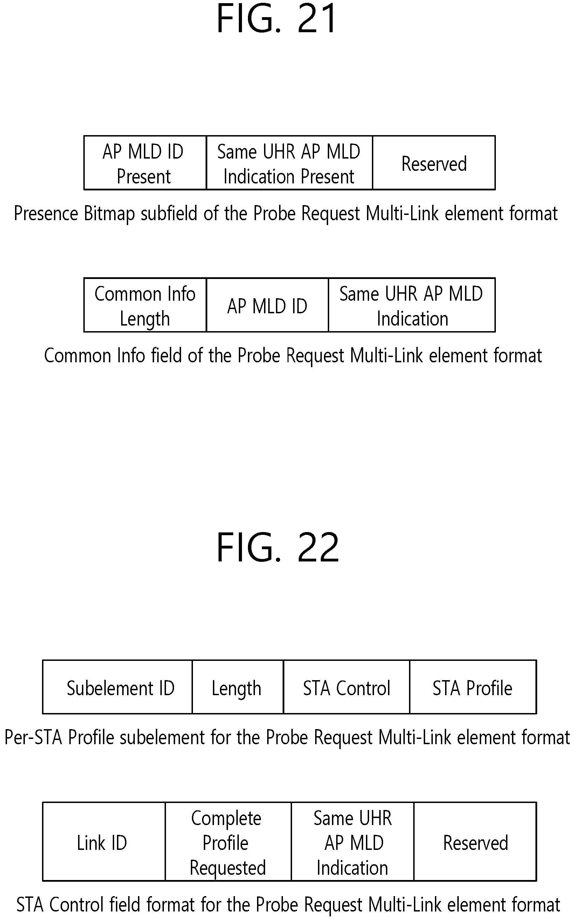

FIG. 21 illustrates an example in which a Same UHR AP MLD indicator is included in a Common Info field.

Referring to FIG. 21, whether a Same UHR AP MLD indicator is included may be indicated through a Presence Bitmap of a Probe Request Multi-Link element. Based on being included only in a Common Info field, only APs of an EHT AP MLD having the Same UHR AP MLD indicator and the same AP MLD ID may be requested. For example, even within the same UHR AP MLD, multiple AP MLD IDs may not be requested.

### 2) Based on being included in a Link Info field - Based on always being present

FIG. 22 illustrates an example in which a Same UHR AP MLD indicator is included in a Link Info field (Mandatory).

A Link Info field may include a plurality of Per-STA Profile subelements, and each may indicate a request for one AP through a Link ID. An EHT AP MLD may be indicated through an AP MLD ID included in a Probe Request Multi-Link element and an AP MLD ID of a STA Control field of a Per-STA Profile subelement. This may request information on a plurality of APs corresponding to a plurality of AP MLD IDs, but based on requesting for the same AP MLD ID, overhead is larger than a method of indicating in a Common Info field.

### 3) Based on being included in a Link Info field - Based on not always being present

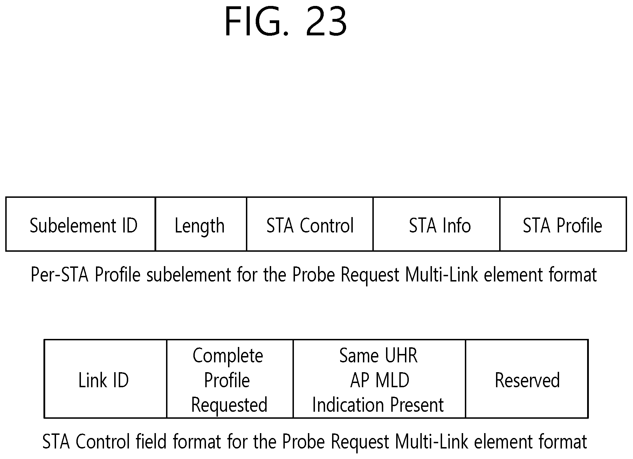

FIG. 23 illustrates an example in which a Same UHR AP MLD indicator is included in a Link Info field (Optional).

Whether a Same UHR AP MLD indicator field is included may be indicated through a Same UHR AP MLD Indication Present of a STA Control field of a Per-STA Profile subelement, and the Same UHR AP MLD indicator may be included in a STA Info field or a STA Profile field. Similarly, this may request information on a plurality of APs corresponding to a plurality of AP MLD IDs. In particular, based on combining with the indication method in the Common Info field of method 1), based on requesting only information on APs corresponding to the same AP MLD ID, overhead may be reduced compared to method 2) by not including the Same UHR AP MLD indicator.

Meanwhile, as another method, based on a Same UHR AP MLD indicator being included in Common Info, it may be implicitly recognized that this is a request for information on APs corresponding to the same AP MLD, and thus the Same UHR AP MLD indicator may not be included in a Link Info field. For example, a Same UHR AP MLD Indication Present field may not be included in the Link Info field.

A multi-link probe response includes a Basic ML IE, and a Same UHR AP MLD indicator may be included in this IE using at least one or more methods as follows.

### 1) Based on being included in a Common Info field

This is applicable based on requesting by method 1) of the multi-link probe request described above.

Similarly, whether a Same UHR AP MLD indicator is included is indicated through a Presence Bitmap, and accordingly, the Same UHR AP MLD indicator is included in a Common Info field. This may provide only information on APs belonging to the same EHT AP MLD.

### 2) Based on being included in a Link Info field - Based on always being present

This is applicable based on requesting by method 2) of the multi-link probe request described above.

A Same UHR AP MLD indicator corresponding to an AP corresponding to a Link ID of each Per-STA Profile subelement is included in a STA Control field. This may provide information on a plurality of APs affiliated with a plurality of AP MLDs, but based on providing for APs affiliated with the same AP MLD, overhead is larger than method 1).

### 3) Based on being included in a Link Info field - Based on not always being present

Whether a Same UHR AP MLD Indication corresponding to an AP corresponding to a Link ID is included may be indicated through a Same UHR AP MLD Indication Present of a STA Control field of a Per-STA Profile subelement. The Same UHR AP MLD Indication may be included in a STA Info field or a STA Profile field. Similarly, this may provide information on a plurality of APs affiliated with a plurality of AP MLDs. In particular, based on combining with the indication method in the Common Info field of method 1), based on providing only information on APs affiliated with the same AP MLD, overhead may be reduced compared to method 2) by not including the Same UHR AP MLD indicator.
=> Meanwhile, based on the case of 3.1 Usage of Same UHR AP MLD Indication: Announcement described above, based on a Same UHR AP MLD indicator being 0, the Same UHR AP MLD indicator may be omitted. For example, based on the Same UHR AP MLD indicator not being present, a STA receiving a Beacon or a Probe Response may implicitly recognize that a corresponding AP is an AP affiliated with a UHR AP MLD with which an AP to which the STA belongs is affiliated.
   = Meanwhile, as another method, based on a Same UHR AP MLD indicator being included in Common Info, it may be implicitly recognized that this is information on APs corresponding to the same UHR AP MLD, and thus the Same UHR AP MLD indicator may not be included in a Link Info field. For example, a UHR AP MLD ID Present field may not be included.

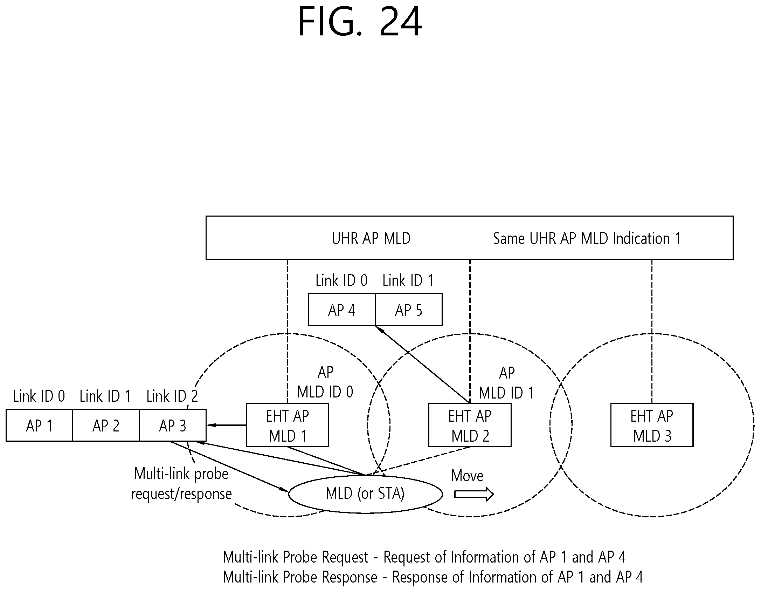

FIG. 24 is an example of multi-link probe request/response using a Same UHR AP MLD indicator.

An MLD (or STA) requests information on AP 1 and AP 4 from AP 3 belonging to EHT AP MLD 1 through a multi-link probe request. At this time, based on requesting Same UHR AP MLD Indication 1 and AP MLD ID 0 for AP 1, and Same UHR AP MLD Indication 1 and AP MLD ID 1 for AP 4, an AP belonging to another EHT AP MLD belonging to the same UHR AP MLD is requested. Therefore, based on method 1) and method 3) of the multi-link probe request, a Same UHR AP MLD Indication of Common Info is not present or is set to 1. For reference, although Link IDs of AP 1 and AP 4 are both 0, they may be distinguished based on the Same UHR AP MLD Indication and the AP MLD ID.

Similarly, AP 3 provides information on AP 1 and AP 4 through a multi-link probe response. Based on method 1) and method 3) of the multi-link probe response, a Same UHR AP MLD Indication of Common Info is not present or is set to 1.

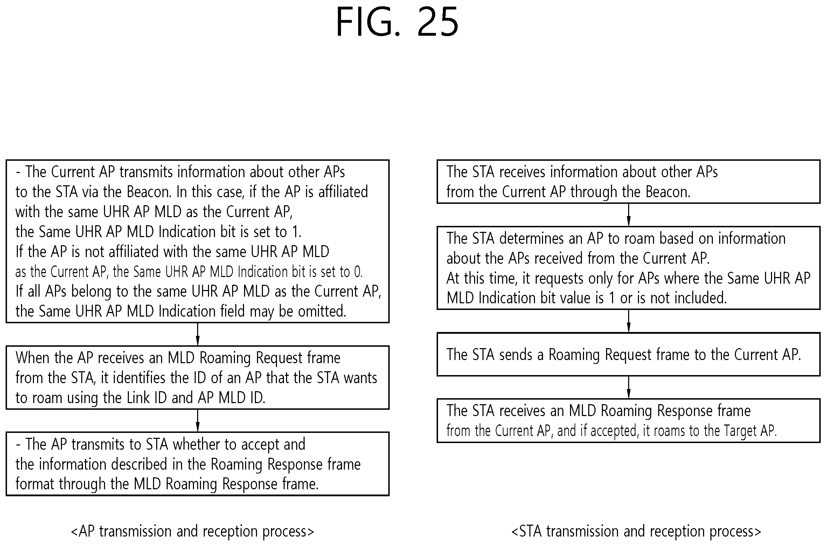

FIG. 25 illustrates a flowchart illustrating a Roaming process.

The transmission and reception process of an AP is as follows.

A current AP transmits information on other APs to a STA through a Beacon. At this time, based on an AP being affiliated with the same UHR AP MLD as the current AP, a bit of a Same UHR AP MLD Indication is set to 1. Based on an AP not being affiliated with the same UHR AP MLD as the current AP, a bit of a Same UHR AP MLD Indication is set to 0. Based on all APs belonging to the same UHR AP MLD as the current AP, a Same UHR AP MLD Indication field may be omitted. Based on receiving an MLD Roaming Request frame from the STA, the AP checks an ID of an AP to which the STA wants to roam through a Link ID and an AP MLD ID. The AP transmits whether to accept to the STA and information described in a Roaming Response frame format through an MLD Roaming Response frame.

The transmission and reception process of a STA is as follows.

The STA receives information on other APs from the current AP through a Beacon. The STA determines an AP to roam based on the information on the APs received from the current AP. At this time, a request is made only for an AP where a Same UHR AP MLD Indication bit value is 1 or not included. The STA transmits a Roaming Request frame to the current AP. The STA receives an MLD Roaming Response frame from the current AP and roams to a target AP based on being accepted.

### 3.3 Usage of ID Configuration: DS-STA-NOTIFY

The present section refers to FIG. 19. Based on a process in which an MLD (or STA) roams from EHT AP MLD 1 to EHT AP MLD 2, data frames may basically be received from APs of currently connected (associated) EHT AP MLD 1. For example, before association with EHT AP MLD 2, APs in EHT AP MLD 2 may not transmit data frames. Based on all EHT AP MLDs receiving data frames for a corresponding MLD (or STA) from a DS in an AP MLD domain, it may be possible, but this is considerably inefficient. Therefore, before roaming is triggered, receiving data frames from APs of EHT AP MLD 1 may be considered. Therefore, at this time, based on roaming being triggered, a method capable of also receiving data frames from APs of EHT AP MLD 2 to roam is required.

Basically, a Distributed System (DS) maps which STA is connected to which EHT AP MLD through a DS-STA-NOTIFY.request from a UHR AP MLD. Based on this, data is delivered to the EHT AP MLD with which a corresponding MLD (or STA) is associated.

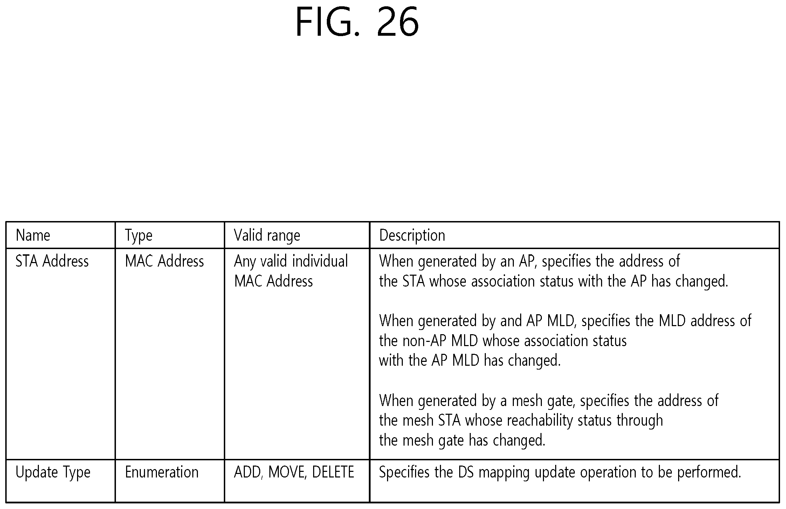

FIG. 26 illustrates an example of primitive parameters of DS-STA-NOTIFY.request.

Therefore, in order to deliver data to each of APs in an EHT AP MLD located at a plurality of places within a UHR AP MLD, an AP MLD ID may be added to primitive parameters of DS-STA-NOTIFY.request. For example, data of an MLD (or STA) is delivered from a DS only to APs of an EHT AP MLD mapped with an AP MLD ID in an AP MLD.

This may configure primitive parameters of DS-STA-NOTIFY.request in the following method.
- An AP MLD ID List as an additional parameter: A DS may deliver data to APs in an EHT AP MLD corresponding to the listed EHT AP MLD ID.
- Newly configure a Temporary DS-STA-NOTIFY.request: A new Temporary DS-STA-NOTIFY.request is added so that an EHT AP MLD to roam may temporarily receive data from a DS before association with APs. The configuration of DS-STA-NOTIFY.request and Temporary DS-STA-NOTIFY.request adds an AP MLD ID to existing primitive parameters.

In order to update this mapping, an MLD (or STA) may make a request including at least one or more of the following information to an AP of an EHT AP MLD (an AP of EHT AP MLD 1 of FIG. 19) before Roaming or an AP of an EHT AP MLD to roam (an AP of EHT AP MLD 2 of FIG. 19). This information may be transmitted based on being included in a Management (Action) frame and the like.
- Additional DS-STA-NOTIFY indication: Additionally, it requests delivering data to an EHT AP MLD to roam through a DS.
- AP MLD ID: An AP MLD ID to update DS-STA-NOTIFY is indicated using the method presented above. The AP MLD ID may be at least one or one or more.

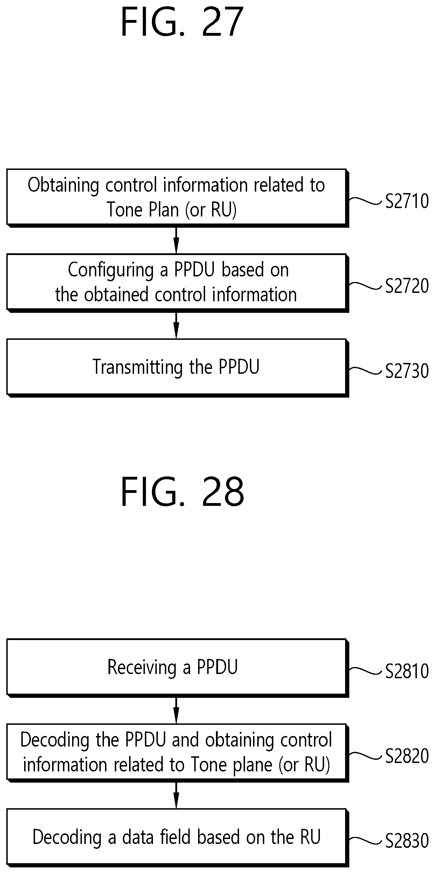

FIG. 27 is a procedural flowchart illustrating an operation of a transmitting apparatus based on the present embodiment.

The example of FIG. 27 may be performed by a transmitting device (AP and/or non-AP STA).

Some of each step (or detailed sub-step to be described later) of the example of FIG. 27 may be skipped/omitted.

Through step S2710, the transmitting device (transmitting STA) may obtain information about the above-described tone plan. As described above, the information about the tone plan includes the size and location of the RU, control information related to the RU, information about a frequency band including the RU, information about an STA receiving the RU, and the like.

Through step S2720, the transmitting device may construct/generate a PPDU based on the acquired control information. Configuring/generating the PPDU may include configuring/generating each field of the PPDU. That is, step S2720 includes configuring the EHT-SIG field including control information about the tone plan. That is, step S2720 includes configuring a field including control information (e.g., N bitmap) indicating the size/position of the RU; and/or configuring a field including an identifier of an STA receiving the RU (e.g., AID).

Also, step S2720 may include generating an STF/LTF sequence transmitted through a specific RU. The STF/LTF sequence may be generated based on a preset STF generation sequence/LTF generation sequence.

Also, step S2720 may include generating a data field (i.e., MPDU) transmitted through a specific RU.

The transmitting device may transmit the PPDU constructed through step S2720 to the receiving device based on step S2730.

While performing step S2730, the transmitting device may perform at least one of operations such as CSD, Spatial Mapping, IDFT/IFFT operation, and GI insertion.

A signal/field/sequence constructed according to the present specification may be transmitted in the form of FIG. 5.

FIG. 28 is a procedural flowchart illustrating an operation of a receiving apparatus based on the present embodiment.

The aforementioned PPDU may be received according to the example of FIG. 28.

The example of FIG. 28 may be performed by a receiving apparatus/device (AP and/or non-AP STA).

Some of each step (or detailed sub-step to be described later) of the example of FIG. 28 may be skipped/omitted.

The receiving device (receiving STA) may receive all or part of the PPDU through step S2810. The received signal may be in the form of FIG. 5.

A sub-step of step S2810 may be determined based on step S2730 of FIG. 27. That is, in step S2810, an operation of restoring the result of the CSD, Spatial Mapping, IDFT/IFFT operation, and GI insertion operation applied in step S2730 may be performed.

In step S2820, the receiving device may perform decoding on all/part of the PPDU. Also, the receiving device may obtain control information related to a tone plan (i.e., RU) from the decoded PPDU.

More specifically, the receiving device may decode the L-SIG and EHT-SIG of the PPDU based on the legacy STF/LTF and obtain information included in the L-SIG and EHT SIG fields. Information on various tone plans (i.e., RUs) described in this specification may be included in the EHT-SIG, and the receiving STA may obtain information on the tone plan (i.e., RU) through the EHT-SIG.

In step S2830, the receiving device may decode the remaining part of the PPDU based on information about the tone plan (i.e., RU) acquired through step S2820. For example, the receiving STA may decode the STF/LTF field of the PPDU based on information about one plan (i.e., RU). In addition, the receiving STA may decode the data field of the PPDU based on information about the tone plan (i.e., RU) and obtain the MPDU included in the data field.

In addition, the receiving device may perform a processing operation of transferring the data decoded through step S2830 to a higher layer (e.g., MAC layer). In addition, when generation of a signal is instructed from the upper layer to the PHY layer in response to data transmitted to the upper layer, a subsequent operation may be performed.

Hereinafter, the above-described embodiment will be described with reference to FIG. 1 to FIG. 28.

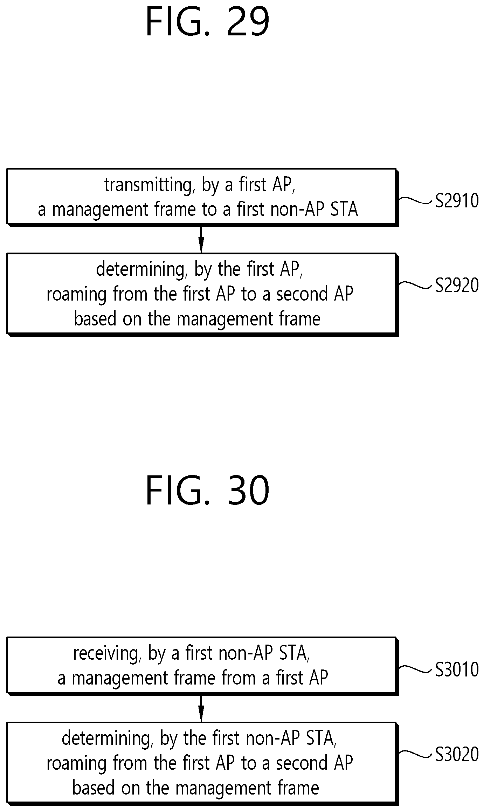

FIG. 29 is a flowchart illustrating a procedure of performing MLD roaming by checking whether an AP is an AP that may perform roaming based on the present embodiment.

The example of FIG. 29 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 29 is performed by a transmitting station (STA), and the transmitting STA may correspond to an access point (AP). The receiving STA in FIG. 29 may correspond to at least one station (STA).

The present embodiment proposes a method of informing, when a non-AP MLD (or non-AP STA) roams to another AP, whether the other AP belongs to the same mobility domain or the same group capable of roaming. In particular, the present embodiment has an effect that seamless roaming may be performed without re-authentication and re-association with an AP to roam by informing in advance whether another AP is capable of roaming through a management frame.

In step S2910, a first access point (AP) transmits a management frame to a first non-AP station (non-AP STA).

In step S2920, the first AP determines roaming from the first AP to a second AP based on the management frame.

The first AP is affiliated with a first AP multi-link device (MLD) and the second AP is affiliated with a second AP MLD. Based on the first and second APs being affiliated with different AP MLDs, AP MLD IDs of the first and second APs may be set to different values.

The management frame includes first information on whether the second AP is included in the same group capable of roaming as the first AP. The first information may be referred to as a Same UHR AP MLD indicator.

Based on the first information being set to 1, the second AP is included in the same group capable of roaming as the first AP. Based on the first information being set to 0, the second AP is not included in the same group capable of roaming as the first AP (for example, the second AP is included in a group capable of roaming different from the first AP).

The first AP may be referred to as an Old AP (O_AP), a Serving AP or a Current AP. The second AP may be referred to as a New AP (N_AP) or a Target AP. The first AP MLD including the first AP may be referred to as a Serving AP MLD. The second AP MLD including the second AP may be referred to as a Target AP MLD.

The group capable of roaming may be referred to as a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

The present embodiment proposes a method for including first information (UHR AP MLD Indication) in a management frame to check whether an AP is an AP that may perform roaming before a non-AP STA requests roaming, thereby preventing information on APs that may not perform roaming from being requested, which has an effect of preventing unnecessary use of resources. In addition, there is an effect that it is possible to move to another AP without a break while solving packet loss and delay.

The management frame may be a Beacon or a Probe response frame.

The first information may be included in a Target Beacon Transmission Time (TBTT) information field of a Reduced Neighbor Report (RNR) Information Element (IE) of the Beacon or Probe response frame.

The AP may receive a request frame from the first non-AP STA. The AP may transmit a response frame to the first non-AP STA. (Or, the first non-AP STA may transmit a request frame to the first AP. The first non-AP STA may receive a response frame from the first AP.)

The request frame may include a first Presence Bitmap subfield and a first common information field. The first Presence Bitmap subfield may include second information indicating presence for the first information. Whether the first information is included in the first common information field may be determined based on a value of the second information.

The request frame may further include a first link information field.

For example, the first information may be included in a STA control field of the first link information field.

As another example, the first link information field may include a STA control field and a STA information field. The STA control field may include the second information. Whether the first information is included in the STA information field may be determined based on a value of the second information.

As another example, based on the first information being included in the first common information field, it may be implicitly recognized that this is a request for information on APs corresponding to the same AP MLD, and thus the first and second information may not be included in the first link information field.

The response frame may include a second Presence Bitmap subfield and a second common information field. The second Presence Bitmap subfield may include the second information indicating presence for the first information. Whether the first information is included in the second common information field may be determined based on a value of the second information.

The response frame may further include a second link information field.

For example, the first information may be included in a STA control field of the second link information field.

As another example, the second link information field may include a STA control field and a STA information field. The STA control field may include the second information. Whether the first information is included in the STA information field may be determined based on a value of the second information.

Based on the roaming from the first AP to the second AP being determined, the first AP may receive an MLD roaming request frame from the first non-AP STA. The first AP may transmit an MLD roaming response frame to the first non-AP STA. The first non-AP STA may perform the roaming from the first AP to the second AP based on the MLD roaming request frame and the MLD roaming response frame. (Or, the first non-AP STA may transmit an MLD roaming request frame to the first AP. The first non-AP STA may receive an MLD roaming response frame from the first AP. The first AP may perform the roaming from the first AP to the second AP based on the MLD roaming request frame and the MLD roaming response frame.)

The MLD roaming request frame may be defined based on a Reconfiguration Multi-link Information Element (IE). A common information field of the MLD roaming request frame may include an identifier of the second AP MLD and an identifier of the group capable of roaming. A link information field of the MLD roaming request frame may include link identifiers of the first and second APs, an identifier of the second AP MLD and an identifier of the group capable of roaming.

The MLD roaming response frame may be defined based on a Basic Multi-link IE. A common information field of the MLD roaming response frame may include the identifier of the second AP MLD and the identifier of the group capable of roaming. A link information field of the MLD roaming response frame may include a link identifier of the second AP, the identifier of the second AP MLD and the identifier of the group capable of roaming.

After the roaming from the first AP to the second AP is completed, the first non-AP STA may receive downlink (DL) data from the second AP.

FIG. 30 is a flowchart illustrating a procedure of performing MLD roaming by checking whether a STA is an AP that may perform roaming based on the present embodiment.

The example of FIG. 30 may be performed in a network environment that supports a next-generation wireless LAN system (Ultra High Reliability (UHR) wireless LAN system or next Wi-Fi). The next-generation wireless LAN system is an improved version of the 802.11be system and can satisfy backward compatibility with the 802.11be system.

An example of FIG. 30 is performed by a receiving station (STA), and the receiving STA may correspond to at least one STA. The transmitting STA in FIG. 30 may correspond to an access point (AP).

The present embodiment proposes a method of informing, when a non-AP MLD (or non-AP STA) roams to another AP, whether the other AP belongs to the same mobility domain or the same group capable of roaming. In particular, the present embodiment has an effect that seamless roaming may be performed without re-authentication and re-association with an AP to roam by informing in advance whether another AP is capable of roaming through a management frame.

In step S3010, a first non-access point station (non-AP STA) receives a management frame from a first AP.

In step S3020, the first non-AP STA determines roaming from the first AP to a second AP based on the management frame.

The first AP is affiliated with a first AP multi-link device (MLD) and the second AP is affiliated with a second AP MLD. Based on the first and second APs being affiliated with different AP MLDs, AP MLD IDs of the first and second APs may be set to different values.

The management frame includes first information on whether the second AP is included in the same group capable of roaming as the first AP. The first information may be referred to as a Same UHR AP MLD indicator.

Based on the first information being set to 1, the second AP is included in the same group capable of roaming as the first AP. Based on the first information being set to 0, the second AP is not included in the same group capable of roaming as the first AP (for example, the second AP is included in a group capable of roaming different from the first AP).

The first AP may be referred to as an Old AP (O_AP), a Serving AP or a Current AP. The second AP may be referred to as a New AP (N_AP) or a Target AP. The first AP MLD including the first AP may be referred to as a Serving AP MLD. The second AP MLD including the second AP may be referred to as a Target AP MLD.

The group capable of roaming may be referred to as a UHR AP MLD. Although the first and second AP MLDs are non-collocated, they are included in the same group capable of roaming, so roaming (or movement) from an AP of the first AP MLD to an AP of the second AP MLD may be possible. APs in the first AP MLD are collocated. APs in the second AP MLD are also collocated.

The present embodiment proposes a method for including first information (UHR AP MLD Indication) in a management frame to check whether an AP is an AP that may perform roaming before a non-AP STA requests roaming, thereby preventing information on APs that may not perform roaming from being requested, which has an effect of preventing unnecessary use of resources. In addition, there is an effect that it is possible to move to another AP without a break while solving packet loss and delay.

The management frame may be a Beacon or a Probe response frame.

The first information may be included in a Target Beacon Transmission Time (TBTT) information field of a Reduced Neighbor Report (RNR) Information Element (IE) of the Beacon or Probe response frame.

The AP may receive a request frame from the first non-AP STA. The AP may transmit a response frame to the first non-AP STA. (Or, the first non-AP STA may transmit a request frame to the first AP. The first non-AP STA may receive a response frame from the first AP.)

The request frame may include a first Presence Bitmap subfield and a first common information field. The first Presence Bitmap subfield may include second information indicating presence for the first information. Whether the first information is included in the first common information field may be determined based on a value of the second information.

The request frame may further include a first link information field.

For example, the first information may be included in a STA control field of the first link information field.

As another example, the first link information field may include a STA control field and a STA information field. The STA control field may include the second information. Whether the first information is included in the STA information field may be determined based on a value of the second information.

As another example, based on the first information being included in the first common information field, it may be implicitly recognized that this is a request for information on APs corresponding to the same AP MLD, and thus the first and second information may not be included in the first link information field.

The response frame may include a second Presence Bitmap subfield and a second common information field. The second Presence Bitmap subfield may include the second information indicating presence for the first information. Whether the first information is included in the second common information field may be determined based on a value of the second information.

The response frame may further include a second link information field.

For example, the first information may be included in a STA control field of the second link information field.

As another example, the second link information field may include a STA control field and a STA information field. The STA control field may include the second information. Whether the first information is included in the STA information field may be determined based on a value of the second information.

Based on the roaming from the first AP to the second AP being determined, the first AP may receive an MLD roaming request frame from the first non-AP STA. The first AP may transmit an MLD roaming response frame to the first non-AP STA. The first non-AP STA may perform the roaming from the first AP to the second AP based on the MLD roaming request frame and the MLD roaming response frame. (Or, the first non-AP STA may transmit an MLD roaming request frame to the first AP. The first non-AP STA may receive an MLD roaming response frame from the first AP. The first AP may perform the roaming from the first AP to the second AP based on the MLD roaming request frame and the MLD roaming response frame.)

The MLD roaming request frame may be defined based on a Reconfiguration Multi-link Information Element (IE). A common information field of the MLD roaming request frame may include an identifier of the second AP MLD and an identifier of the group capable of roaming. A link information field of the MLD roaming request frame may include link identifiers of the first and second APs, an identifier of the second AP MLD and an identifier of the group capable of roaming.

The MLD roaming response frame may be defined based on a Basic Multi-link IE. A common information field of the MLD roaming response frame may include the identifier of the second AP MLD and the identifier of the group capable of roaming. A link information field of the MLD roaming response frame may include a link identifier of the second AP, the identifier of the second AP MLD and the identifier of the group capable of roaming.

After the roaming from the first AP to the second AP is completed, the first non-AP STA may receive downlink (DL) data from the second AP.

### < Device configuration>

The technical features of the present disclosure described above may be applied to various devices and methods. For example, the technical features of the present disclosure described above may be performed/supported through the device of FIG. 1 and/or FIG. 14. For example, the technical features of the present disclosure described above may be applied to only a part of FIG. 1 and/or FIG. 14. For example, the technical features of the present disclosure described above may be implemented based on processing chips 114 and 124 of FIG. 1, implemented based on processors 111 and 121 and memories 112 and 122 of FIG. 1, or implemented based on a processor 610 and a memory 620 of FIG. 14. For example, a device of the present disclosure receives a management frame from a first access point (AP); and determines roaming from the first AP to a second AP based on the management frame,

The technical features of the present disclosure may be implemented based on a computer readable medium (CRM). For example, a CRM proposed by the present disclosure is at least one computer readable medium including instructions based on being executed by at least one processor.

The CRM may store instructions performing operations including: receiving a management frame from a first access point (AP); and determining roaming from the first AP to a second AP based on the management frame, Instructions stored in the CRM of the present disclosure may be executed by at least one processor. At least one processor related to the CRM of the present disclosure may be the processors 111 and 121 or the processing chips 114 and 124 of FIG. 1, or the processor 610 of FIG. 14. Meanwhile, the CRM of the present disclosure may be the memories 112 and 122 of FIG. 1, the memory 620 of FIG. 14, or a separate external memory/storage medium/disk and the like.

The foregoing technical features of the present specification are applicable to various applications or business models. For example, the foregoing technical features may be applied for wireless communication of a device supporting artificial intelligence (AI).

Artificial intelligence refers to a field of study on artificial intelligence or methodologies for creating artificial intelligence, and machine learning refers to a field of study on methodologies for defining and solving various issues in the area of artificial intelligence. Machine learning is also defined as an algorithm for improving the performance of an operation through steady experiences of the operation.

An artificial neural network (ANN) is a model used in machine learning and may refer to an overall problem-solving model that includes artificial neurons (nodes) forming a network by combining synapses. The artificial neural network may be defined by a pattern of connection between neurons of different layers, a learning process of updating a model parameter, and an activation function generating an output value.

The artificial neural network may include an input layer, an output layer, and optionally one or more hidden layers. Each layer includes one or more neurons, and the artificial neural network may include synapses that connect neurons. In the artificial neural network, each neuron may output a function value of an activation function of input signals input through a synapse, weights, and deviations.

A model parameter refers to a parameter determined through learning and includes a weight of synapse connection and a deviation of a neuron. A hyper-parameter refers to a parameter to be set before learning in a machine learning algorithm and includes a learning rate, the number of iterations, a mini-batch size, and an initialization function.

Learning an artificial neural network may be intended to determine a model parameter for minimizing a loss function. The loss function may be used as an index for determining an optimal model parameter in a process of learning the artificial neural network.

Machine learning may be classified into supervised learning, unsupervised learning, and reinforcement learning.

Supervised learning refers to a method of training an artificial neural network with a label given for training data, wherein the label may indicate a correct answer (or result value) that the artificial neural network needs to infer when the training data is input to the artificial neural network. Unsupervised learning may refer to a method of training an artificial neural network without a label given for training data. Reinforcement learning may refer to a training method for training an agent defined in an environment to choose an action or a sequence of actions to maximize a cumulative reward in each state.

Machine learning implemented with a deep neural network (DNN) including a plurality of hidden layers among artificial neural networks is referred to as deep learning, and deep learning is part of machine learning. Hereinafter, machine learning is construed as including deep learning.

The foregoing technical features may be applied to wireless communication of a robot.

Robots may refer to machinery that automatically process or operate a given task with own ability thereof. In particular, a robot having a function of recognizing an environment and autonomously making a judgment to perform an operation may be referred to as an intelligent robot.

Robots may be classified into industrial, medical, household, military robots and the like according uses or fields. A robot may include an actuator or a driver including a motor to perform various physical operations, such as moving a robot joint. In addition, a movable robot may include a wheel, a brake, a propeller, and the like in a driver to run on the ground or fly in the air through the driver.

The foregoing technical features may be applied to a device supporting extended reality.

Extended reality collectively refers to virtual reality (VR), augmented reality (AR), and mixed reality (MR). VR technology is a computer graphic technology of providing a real-world object and background only in a CG image, AR technology is a computer graphic technology of providing a virtual CG image on a real object image, and MR technology is a computer graphic technology of providing virtual objects mixed and combined with the real world.

MR technology is similar to AR technology in that a real object and a virtual object are displayed together. However, a virtual object is used as a supplement to a real object in AR technology, whereas a virtual object and a real object are used as equal statuses in MR technology.

XR technology may be applied to a head-mount display (HMD), a head-up display (HUD), a mobile phone, a tablet PC, a laptop computer, a desktop computer, a TV, digital signage, and the like. A device to which XR technology is applied may be referred to as an XR device.

The claims recited in the present specification may be combined in a variety of ways. For example, the technical features of the method claims of the present specification may be combined to be implemented as a device, and the technical features of the device claims of the present specification may be combined to be implemented by a method. In addition, the technical characteristics of the method claim of the present specification and the technical characteristics of the device claim may be combined to be implemented as a device, and the technical characteristics of the method claim of the present specification and the technical characteristics of the device claim may be combined to be implemented by a method.

## Claims

1. A method in a wireless LAN system, the method comprising:
receiving, by a first non-access point station (non-AP STA), a management frame from a first AP; and
determining, by the first non-AP STA, roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.

2. The method of claim 1, wherein the management frame is a Beacon or a Probe response frame, and
wherein the first information is included in a Target Beacon Transmission Time (TBTT) information field of a Reduced Neighbor Report (RNR) Information Element (IE) of the Beacon or Probe response frame.

3. The method of claim 1, further comprising:
transmitting, by the first non-AP STA, a request frame to the first AP; and
receiving, by the first non-AP STA, a response frame from the first AP,
wherein the request frame includes a first Presence Bitmap subfield and a first common information field,
wherein the first Presence Bitmap subfield includes second information indicating presence for the first information, and
wherein whether the first information is included in the first common information field is determined based on a value of the second information.

4. The method of claim 3, wherein the request frame further includes a first link information field, and
wherein the first information is included in a STA control field of the first link information field.

5. The method of claim 3, wherein the request frame further includes a first link information field,
wherein the first link information field includes a STA control field and a STA information field,
wherein the STA control field includes the second information, and
wherein whether the first information is included in the STA information field is determined based on the value of the second information.

6. The method of claim 3, wherein the response frame includes a second Presence Bitmap subfield and a second common information field,
wherein the second Presence Bitmap subfield includes the second information indicating presence for the first information, and
wherein whether the first information is included in the second common information field is determined based on the value of the second information.

7. The method of claim 6, wherein the response frame further includes a second link information field, and
wherein the first information is included in a STA control field of the second link information field.

8. The method of claim 6, wherein the response frame further includes a second link information field,
wherein the second link information field includes a STA control field and a STA information field,
wherein the STA control field includes the second information, and
wherein whether the first information is included in the STA information field is determined based on the value of the second information.

9. The method of claim 6, further comprising, based on the roaming from the first AP to the second AP being determined:
transmitting, by the first non-AP STA, an MLD roaming request frame to the first AP;
receiving, by the first non-AP STA, an MLD roaming response frame from the first AP; and
performing, by the first non-AP STA, the roaming from the first AP to the second AP based on the MLD roaming request frame and the MLD roaming response frame.

10. The method of claim 9, wherein the MLD roaming request frame is defined based on a Reconfiguration Multi-link Information Element (IE), and
wherein the MLD roaming response frame is defined based on a Basic Multi-link IE.

11. A first non-access point station (non-AP STA) in a wireless LAN system, the first non-AP STA comprising:
a memory;
a transceiver; and
a processor operated to be coupled to the memory and the transceiver,
wherein the processor is configured to:
receive a management frame from a first AP; and
determine roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.

12. A method in a wireless LAN system, the method comprising:
transmitting, by a first access point (AP), a management frame to a first non-AP station (STA); and
determining, by the first AP, roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.

13. The method of claim 12, wherein the management frame is a Beacon or a Probe response frame, and
wherein the first information is included in a Target Beacon Transmission Time (TBTT) information field of a Reduced Neighbor Report (RNR) Information Element (IE) of the Beacon or Probe response frame.

14. The method of claim 12, further comprising:
receiving, by the first AP, a request frame from the first non-AP STA; and
transmitting, by the first AP, a response frame to the first non-AP STA,
wherein the request frame includes a first Presence Bitmap subfield and a first common information field,
wherein the first Presence Bitmap subfield includes second information indicating presence for the first information, and
wherein whether the first information is included in the first common information field is determined based on a value of the second information.

15. The method of claim 14, wherein the request frame further includes a first link information field, and
wherein the first information is included in a STA control field of the first link information field.

16. The method of claim 14, wherein the request frame further includes a first link information field,
wherein the first link information field includes a STA control field and a STA information field,
wherein the STA control field includes the second information, and
wherein whether the first information is included in the STA information field is determined based on the value of the second information.

17. The method of claim 14, wherein the response frame includes a second Presence Bitmap subfield and a second common information field,
wherein the second Presence Bitmap subfield includes the second information indicating presence for the first information, and
wherein whether the first information is included in the second common information field is determined based on the value of the second information.

18. A first access point (AP) in a wireless LAN system, the first AP comprising:
a memory;
a transceiver; and
a processor operated to be coupled to the memory and the transceiver,
wherein the processor is c
onfigured to:
transmit a management frame to a first non-AP station (STA); and
determine roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.

19. At least one computer readable medium including an instruction based on being executed by at least one processor, comprising:
receiving a management frame from a first access point (AP); and
determining roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.

20. An apparatus in a wireless LAN system, the apparatus comprising:
a memory; and
a processor operated to be coupled to the memory,
wherein the processor:
receives a management frame from a first access point (AP); and
determines roaming from the first AP to a second AP based on the management frame,
wherein the first AP is affiliated with a first AP multi-link device (MLD) and the second AP is affiliated with a second AP MLD,
wherein the management frame includes first information on whether the second AP is included in the same group capable of roaming as the first AP,
wherein the second AP is included in the same group capable of roaming as the first AP based on the first information being set to 1, and
wherein the second AP is not included in the same group capable of roaming as the first AP based on the first information being set to 0.
